# EUROPEAN PATENT APPLICATION

(11) **EP 1 473 937 A1**
(43) Date of publication of application: **03.11.2004**
(21) Application number: 02793348.0
(22) Date of filing: 12.12.2002
(51) Int. Cl.: H04N 7/14

(54) **COMMUNICATION APPARATUS**

(30) Priority: 18.01.2002 JP 2002009314
(71) Applicant: MATSUSHITA ELECTRIC INDUSTRIAL CO., LTD., Kadoma-shi, Osaka 571-8501 (JP)
(72) Inventor: FUJIMURA, Fumio, Saijyo-shi, Ehime 793-0021 (JP); YAMASHITA, Masaaki, Niihama-shi, Ehime 792-0050 (JP); TAKARADA, Shinichi, Niihama-shi, Ehime 792-0050 (JP)
(74) Representative: Pfau, Anton Konrad, Dr.
(86) International application number: PCT/JP2002/013038
(87) International publication number: WO 2003/063483

(57) **Abstract**

An object of the present invention is to provide a communication apparatus that allows any image contained in data exchanged between communication terminals such as mobile phones to be properly displayed in accordance with the capabilities of the receiving communication terminals. The communication apparatus according to the present invention can properly display an image according to the capabilities of a receiving communication terminal 1110 because the properties of the image are converted to suit the capabilities of the receiving communication terminal 1110. Moreover, when a plurality of images are combined or a modification is made to an image in communication terminals such as mobile phones and the resulting image or images are transmitted, the image properties of each image are converted to suit the capabilities of each receiving communication terminal 1110 before the combination or modification. Thus, any image can be properly displayed in accordance with the capabilities of the receiving communication terminal 1110.

## Description

### Technical Field

The present invention relates to a communication apparatus for pictorially communicating with a plurality of users of communication terminals over a network and, in particular, to a communication apparatus with the emotional expression indicating capability for properly indicating a method for establishing communication to initiate communication and emotional information about a sender during communication and the capability of modifying images.

### Background Art

The growth of Internet technologies has propelled the widespread use of electronic chats and a variety of communication tools such as internet-enabled phones and mobile phones.

In order for a person to initiate communication with another person on the Internet, a communication tool of that person must be active and connected to the Internet. Existing facilities for indicating whether or not a communication tool of the person of interest is active include those described in ICQ (http://web.icq.com/). Various communication tools are available such as text-based communication tools, voice conversation tools, and video conversation tools. Some communication tools identify an active communication tool of a person of interest and notify the availability of the tool to the initiator of conversation.

These technologies enables a user to know whether or not a person with whom he or she wants to converse is connected to the Internet, or what kind of media, such as text, voice, and video, can be used to communicate with the person of interest, by specifying the e-mail address of the person of interest and initiate a conversation by using an appropriate medium.

However, such a conversation candidate that a user wants to communicate with is often offline and therefore it is difficult to call up a number of members of interest to immediately hold a conversation or conference at any time. There is a problem that a user must specify the start time of a conversation or a conference and notify it to the members, and all the members establish connection to the Internet by that time before the conversation or conference starts. There is another problem that what a sender wants to convey to the other parties is not always accurately understood by them because the display size of transmittable images are small and they are compressed at high compression ratios due to low data transfer rates of communication links on the Internet.

Moreover, in these days, mail messages with image data are being exchanged commonly to perform communication between users by mobile phones. In some cases, however, an image cannot properly be displayed on a receiving mobile phone due to difference between the performance capabilities of a sending mobile phone and those of the receiving mobile phones. To avoid this, before a sender sends image data from his or her mobile phone to other mobile phones, the sender stores the image data supported by the capabilities of each of the receiving mobile phones beforehand in a server on the Internet, the receivers provide information about their mobile phone models to the server by e-mail through their mobile phones, and then the server selects image data supported by each of the models to send it to each receiving mobile phones.

However, these conventional communication apparatuses require that a sender selecting image data registered with a server to send should provide image data that has the same content as that of the registered image data but image properties different from those of the registered data in order to allow the image data to be displayed properly on receiving mobile phones. As the amount of image data registered with the server or the number of supported models of receiving mobile phone is increased, more storage areas in the server is required for storing the increased amount of image data. Moreover, if unregistered image data, such as image data captured by using a camera function included in a sender's mobile phone, is sent or a composite image data of registered image data and unregistered image data is sent to mobile phones, the unregistered image data is possibly not supported by some of the receiving mobile phones and the image may not properly be displayed on them.

### Disclosure of Invention

The present invention solve these problems of the prior art and an object of the present invention is to provide a communication apparatus that allows a user who wants to perform communication over the Internet to request a conversation candidate/candidates to converse to connect a server on the network.

Another object of the present invention is to provide a communication apparatus having the capability of indicating feelings of a user during communication on the Internet.

Yet another object of the present invention is to provide a communication apparatus that allows any image contained in data exchanged between communication terminals such as mobile phones to be properly displayed in accordance with the capabilities of the receiving communication terminals.

In order to achieve these objects, a communication apparatus set forth in claim 1 of the present invention is an apparatus for performing conversation over the Internet, comprising: a plurality of first communication terminals each having a module for shooting an image of a speaker and a module for displaying the images of all participants in a conversation, the first communication terminal enabling conversation over the Internet while displaying the image of the speaker; second communication terminals provided correspondingly to the first communication terminals; a server for performing internet communication; a first communication link for connecting the server with the first communication terminals; and a second communication link for connecting the server with the second communication terminals; wherein, when a conversation over the Internet is initiated from one of the first communication terminals, a request for participating in the conversation is sent to the second communication terminals owned by intended one or more conversation partners.

As set forth in claim 2, there is provided the communication apparatus according to claim 1, wherein if any of the requested conversation partners cannot participant in the conversation, information indicating the existence of an unavailable conversation partner and any information provided by the unavailable conversation partner are sent from the second communication terminal to the server and the server sends the information indicating the existence of the unavailable conversation partner and the information provided by the unavailable conversation partner to the first communication terminals of the other intended conversation partners.

As set forth in claim 3, there is provided the communication apparatus according to claim 1 or 2, wherein the second communication terminal is an e-mail-enabled mobile phone.

As set forth in claim 4, there is provided the communication apparatus according to claim 1 or 2, wherein the second communication terminal is a pager.

As set forth in claim 5, there is provided the communication apparatus according to claim 1 or 2, wherein an e-mail-enabled mobile phone is used as both of the first and second communication terminals.

As set forth in claim 6, there is provided the communication apparatus according to claim 5, wherein one communication link is used as both of the first and second communication links to connect to the server.

As set forth in claim 7, there is provided the communication apparatus according to any of the preceding claims, wherein a real name or a handle is used as information for identifying each of the intended conversation partners.

As set forth in claim 8, there is provided the communication apparatus according to any of claims 1, 2, 3, 4, 5, or 6, wherein an e-mail address is used as information for identifying each of the intended conversation partners.

As set forth in claim 9, there is provided a communication apparatus for performing conversation over the Internet, comprising: a plurality of communication terminals each having a module for capturing an image of a person performing communication, a module for displaying images of all participants in the communication, a switch for adding image information, and a module for selecting emotion-indicating image information indicating emotion and performing communication over the Internet; a server for performing internet communication; a communication link for connecting the server with the communication terminals; and a storage for storing the emotion-indicating image information; wherein emotion-indicating image information selected by the module for selecting emotion-indicating image information is combined with the image captured by the image capturing module in response to an instruction provided through the image information adding switch, and the resulting composite image is displayed on the image displaying module.

As set forth in claim 10, there is provided the communication apparatus according to claim 9, wherein the emotion-indicating image information selected by the module for selecting emotion-indicating image information and the image captured by the image capturing module are combined at a communication terminal having selected the image information and the resulting composite image is sent to a communication terminal of an intended recipient of the communication through the server and displayed on the image displaying module of the communication terminal of the intended recipient of the communication.

As set forth in claim 11, there is provided the communication apparatus according to claim 9, wherein the emotion-indicating image information selected by the module for selecting emotion-indicating image information and the image captured by the image capturing module are combined at the server, sent to the communication terminal of the intended recipient of the communication, and displayed on the image displaying module of the communication terminal of the intended recipient of the communication.

As set forth in claim 12, there is provided the communication apparatus according to claim 9, wherein the emotion-indicating image information selected by the module for selecting emotion-indicating image information and the image captured by the image capturing module are sent to the communication terminal of the intended recipient of the communication, combined at the communication terminal of the intended recipient of the communication, and displayed on the image displaying module.

As set forth in claim 13, there is provided the communication apparatus according to claim 9, wherein the position and shape of the emotion-indicating image information selected by the module for selecting emotion-indicating image information are changed according to a change in the image captured by the image capturing module.

As set forth in claim 14 there is provided the communication apparatus according to claim 13, wherein the change in the image captured by the image capturing module is the change of the position of the face of a person in the image.

As set forth in claim 15, there is provided the communication apparatus according to claim 9, wherein the instruction provided through the information adding switch is mechanically and directly provided by a sender.

As set forth in claim 16, there is provided the communication apparatus according to claim 9, wherein the image information adding switch has a storage containing an audio keyword and the instruction for adding image information is determined on the basis of whether or not a voice in the communication matches the audio keywords.

As set forth in claim 17, there is provided the communication apparatus according to claim 9, wherein the information adding switch has a storage containing a facial expression image and the instruction for adding image information is determined on the basis of whether or not an image matches the facial expression image.

As set forth in claim 18, there is provided the communication apparatus according to claim 9, wherein any of the emotion-indicating image information stored in the server is obtained and combined with the image captured.

As set forth in claim 19, there is provided the communication apparatus according to claim 9, wherein emotion-indicating image information created in a device connected to the server is obtained and combined with the image captured.

As set forth in claim 20, there is provided the communication apparatus according to claim 9, wherein the emotion-indicating image information is graphics.

As set forth in claim 21, there is provided the communication apparatus according to claim 9, wherein the emotion-indicating image information is a natural image.

As set forth in claim 22, there is provided the communication apparatus according to claim 9, wherein the emotion-indicating image information is a character or symbol.

As set forth in claim 23, there is provided the communication apparatus according to any of claims 1, 2, or 9, wherein, when the communication is performed with voice conversation, the volume of the voice in the conversation is used to identify a speaker by said server and a zoomed image of the speaker is displayed on the image displaying module.

As set forth in claim 24, there is provided the communication apparatus according to any of claims 1, 2, or 9, wherein, when the communication is performed with voice conversation, an audio waveform of voice of each speaker in the conversation is rectified and rectified direct-current components are integrated for a certain unit of time to give an integral, in the server, and if the integral associated with any participant in the conversation exceeds a predetermined threshold, the image of the participant is zoomed, and if there is no participant whose associated integral exceeds the threshold, evenly sized images of the participants in the conversation are displayed on the image displaying module.

As set forth in claim 25, there is provided the communication apparatus according to any of claims 1, 2 or 9, wherein, when the communication is performed with voice conversation, the audio waveform of voice of each speaker in the conversation is rectified and rectified direct-current components are integrated for a certain unit of time, and an average of integrals calculated for a plurality of units of time is given, in the server, and if the average integral associated with any participant in the conversation exceeds a predetermined threshold, the image of the participant is zoomed, and if there is no participant whose associated integral exceeds the threshold, evenly sized images of the participants in the conversation are displayed on the image displaying module.

As set forth in claim 26, there is provided the communication apparatus according to claim 1 or 2, wherein a vibration device is provided in the second communication terminals and a request for participating in communication is made by activating the vibration device in the second communication terminals of intended recipients of the communication.

As set forth in claim 27, there is provided the communication apparatus according to claim 9, wherein a vibration device is provided in the communication terminals and a request for participating in communication is made by activating the vibration device in the communication terminals of intended recipients of the communication.

As set forth in claim 28, there is provided the communication apparatus according to claim 9, wherein a vibration device for indicating emotion by vibration and a switch for activating the vibration of the vibration device of intended recipient of communication are provided in the communication terminals and the vibration device is activated by an instruction provided through the switch to indicate an emotion to the intended recipient of the communication.

As set forth in claim 29, there is provided a communication apparatus comprising a server connected to a network and a plurality of communication terminals capable of communicating with one another through the server, the communication apparatus being capable of combining a plurality of images and sending the resulting composite image from any of the communication terminal to any other communication terminals, the server comprising: an image storage for receiving and storing an image sent from a sending communication terminal; an additional information storage for storing a plurality of pieces of additional information to be combined with the sent image; an additional information selector for selecting a piece of additional information to be combined with the sent image according to an instruction from the sending communication terminal; a terminal information requesting module for requesting an intended receiving communication terminal to send terminal information about the receiving communication terminal; a terminal information acquisition module for receiving the terminal information sent form the receiving communication terminal; an additional information combining module for converting the image properties of the sent image and the additional information according to the terminal information and combining converted the image with the converted additional information; and a composite image transmitter for sending the composite image to the receiving communication terminal; wherein the image properties of the sent image and the additional information are converted so as to be optimally displayed on the intended receiving communication terminal, then the sent image and the additional information are combined and the resulting composite image is sent and received.

As set forth in claim 30, there is provided a communication apparatus comprising a server connected to a network and a plurality of communication terminals each being capable of communicating with one another through the server, the communication apparatus being capable of combining a plurality of images and sending the resulting composite image from any of the communication terminal to any other communication terminals, the server comprising: an image storage for receiving and storing an image sent from a sending communication terminal; an additional information storage for storing a plurality of pieces of additional information to be combined with the sent image and different versions of each piece of additional information, the versions having different image properties; an additional information selector for selecting a piece of additional information to be combined with the sent image according to an instruction fromthe sending communication terminal; a terminal information requesting module for requesting a receiving communication terminal to send terminal information about the receiving communication terminal; a terminal information acquisition module for receiving the terminal information sent form the receiving communication terminal; an additional information selector for selecting the most suitable version of additional information for the receiving communication terminal according to the terminal information from among versions of the additional information selected in response to an instruction provided from the sending communication terminal; an additional information combining module for converting the image properties of the sent image according to the terminal information and combining the converted image with the selected additional information; and a composite image transmitter for sending the composite image to the receiving communication terminal; wherein the image properties of the sent image is converted so as to be optimally displayed on the intended receiving communication terminal, the additional information is selected and combined with the sent image, and the resulting composite image is sent and received.

As set forth in claim 31, there is provided a communication apparatus comprising a server connected to a network and a plurality of communication terminals each being capable of communicating with one another through the server, the communication apparatus being capable of combining a plurality of images and sending the resulting composite image from any of the communication terminal to any other communication terminals, the server comprising: an image storage for receiving and storing an image sent from a sending communication terminal; an additional information storage for storing a plurality of pieces of additional information to be combined with the sent image; an additional information selector for selecting a piece of additional information to be combined with the sent image according to an instruction from the sending communication terminal; a terminal information requesting module for requesting an intended receiving communication terminal to send terminal information about the receiving communication terminal; a terminal information acquisition module for receiving said terminal information sent from said receiving communication terminal; an image feature detector for detecting a feature of the sent image; an additional information combining module for converting the image properties of the sent image and the additional information according to the terminal information and then superimposing the additional information on a position in the sent image, the position being determined according to the feature of the sent image; and a composite image transmitter for sending the composite image to the receiving communication terminal; wherein the image properties of the sent image and the additional information are converted so as to be optimally displayed on the intended receiving communication terminal, then the sent image and the additional information are combined and the resulting composite image is sent and received.

As set forth in claim 32, there is provided a communication apparatus comprising a server connected to a network and a plurality of communication terminals each being capable of communicating with one another through the server, the communication apparatus being capable of combining a plurality of images and sending the resulting composite image from any of the communication terminal to any other communication terminals, the server comprising: an image storage for receiving and storing an image sent from a sending communication terminal; an additional information storage for storing a plurality of pieces of additional information to be combined with the sent image and different versions of each piece of additional information, the versions having different image properties; an additional information selector for selecting a piece of additional information to be combined with the sent image according to an instruction from the sending communication terminal; a terminal information requesting module for requesting an intended receiving communication terminal to send terminal information about the receiving communication terminal; a terminal information acquisition module for receiving the terminal information sent form the receiving communication terminal; an additional information selector for selecting the most suitable version of additional information for said receiving communication terminal according to said terminal information from among versions of the additional information selected in response to an instruction provided from said sending communication terminal; an image feature detector for detecting a feature of the sent image; an additional information combining module for converting the image properties of the sent image according to the terminal information and then superimposing the selected additional information on a position in the sent image, the position being determined according to the feature of the sent image; and a composite image transmitter for sending the composite image to the receiving communication terminal; wherein the image properties of the sent image is converted so as to be optimally displayed on the intended receiving communication terminal, the additional information is selected and combined with the sent image, and the resulting composite image is sent and received.

As set forth in claim 33, there is provided the communication apparatus according to claim 31 or 32, wherein the image feature detector detects the size, position and/or motion of a person in the sent image.

As set forth in claim 34, there is provided the communication apparatus according to claim 31 or 32, wherein the image feature detector detects the size and position of the face or other parts of the person in the sent image.

As set forth in claim 35, there is provided the communication apparatus according to claim 33 or 34, wherein the image feature detector detects the skin color of the person in the sent image so that the skin color of the person is not impaired by the conversion of the image properties.

As set forth in claim 36, there is provided a communication apparatus comprising a server connected to a network and a plurality of communication terminals each being capable of communicating with one another through the server, the communication apparatus being capable of adding a special effect to an image and sending the resulting image from any of the communication terminal to any other communication terminals, the server comprising: an image storage for receiving and storing an image sent from a sending communication terminal; a special effect storage unit for storing a program for adding a special effect to the sent image; a special effect selector for selecting a special effect to be added to the sent image according to an instruction provided from the sending communication terminal; a terminal information requesting module for requesting an intended receiving communication terminal to send terminal information about the receiving communication terminal; a terminal information acquisition module for receiving the terminal information sent form the receiving communication terminal; a special effect adding module for adding the selected special effect after converting the image properties of the sent image according to the terminal information; and a composite image transmitter for sending the composite image to which the special effect is added to the receiving communication terminal; wherein the image properties of the sent image is converted so as to be optimally displayed on the intended receiving communication terminal and then the image to which the special effect is added is sent and received.

As set forth in claim 37, there is provided the communication apparatus according to claim 36, wherein the server comprises an image feature detector for detecting a feature of the sent image and the special effect is added to the detected feature.

As set forth in claim 38, there is provided the communication apparatus according to claim 37, wherein the image feature detector detects the size, position and/or motion of a person in the sent image.

As set forth in claim 39, there is provided the communication apparatus according to claim 37, wherein the image feature detector detects the size and position of the face or other parts of the person in the sent image.

As set forth in claim 40, there is provided a communication apparatus comprising a server connected to a network and a plurality of communication terminals each being capable of communicating with one another through the server, the communication apparatus being capable of adding a special effect to an image and sending the resulting composite image from any of the communication terminal to any other communication terminals, the server comprising: an image storage for receiving and storing an image sent from a sending communication terminal; an additional information storage for storing a plurality of pieces of additional information to be combined with the sent image; an additional information selector for selecting a piece of additional information to be combined with the sent image according to an instruction from the sending communication terminal; a composite image confirming module for combining the sent image with the additional information and sending the resulting composite image to the sending communication terminal for confirmation; an image transmitter for sending the image to an intended receiving communication terminal in response to confirmation provided from the sending communication terminal; and an additional information transmitter for sending the additional information to the receiving communication terminal in response to confirmation provided from the sending communication terminal; the communication terminal comprising: an image viewing module for displaying the composite image received from the composite image confirming module; an image transmitter for selecting an image and sending the image to the server; an additional information specifying module for specifying additional information to be added to the image to be sent while viewing the additional information on the image viewing module; a transmission commanding module for issuing a command for transmitting the image and the additional information to the receiving communication terminal; an image receiver for receiving the sent image from the server; an additional information receiver for receiving the additional information from the server; a terminal information acquisition module for acquiring terminal information about the intended receiving communication terminal; an additional information combining unit for converting the sent image and the additional information according to the terminal information and combining the converted image with the converted additional information; and a display for displaying the composite image generated by the additional information combining module; wherein the image properties of the sent image and the additional information are converted so as to be optimally displayed on the intended receiving communication terminal, then the sent image and the additional information are combined and the resulting composite image is sent and received.

As set forth in claim 41, there is provided the communication apparatus according to claim 40, wherein the communication terminal comprises a program downloading module connected to the network for obtaining over the network a program for converting the image properties of the image and additional information according to the terminal information and combining the converted image with the converted additional information in the additional information combining module.

As set forth in claim 42, there is provided a communication apparatus comprising a server connected to a network and a plurality of communication terminals each being capable of communicating with one another through the server, the communication apparatus being capable of combining a plurality of images and sending the resulting composite image from any of the communication terminal to any other communication terminals, the server comprising: an image storage for receiving and storing an image sent from a sending communication terminal; an additional information storage for storing a plurality of pieces of additional information to be combined with the sent image; an additional information selector for selecting a piece of additional information to be combined with the sent image according to an instruction from the sending communication terminal; a composite image confirming module for combining the sent image with the additional information and sending the resulting composite image to the sending communication terminal for confirmation; an image transmitter for sending the sent image to an intended receiving communication terminal in response to confirmation provided from the sending communication terminal; and an additional information transmitter for sending the additional information to the receiving communication terminal in response to confirmation provided from the sending communication terminal; the communication terminal comprising: an image viewing module for displaying the composite image received from the composite image confirming module; an image transmitter for selecting an image and sending the image to the server; an additional information specifying module for specifying additional information to be added to the image to be sent while viewing the additional information on the image viewing module; a transmission commanding module for issuing a command for transmitting the image and the additional information to the receiving communication terminal; an image receiver for receiving the sent image from the server; an additional information receiver for receiving the additional information from the server; a terminal information acquisition module for acquiring terminal information about the intended receiving communication terminal; an image feature detector for detecting a feature of the sent image; an additional information combining module for converting the image properties of the sent image and the additional information according to the terminal information and then superimposing the additional information on a position in the sent image, the position being determined according to the feature of the sent image; and a display for displaying the composite image generated by the additional information combining module; wherein the image properties of the sent image and the additional information are converted so as to be optimally displayed on the intended receiving communication terminal, then the sent image and the additional information are combined and the resulting composite image is sent and received.

As set forth in claim 43, there is provided the communication apparatus according to claim 42, wherein the image feature detector detects the size, position and/or motion of a person in the sent image.

As set forth in claim 44, there is provided the communication apparatus according to claim 42, wherein the image feature detector detects the size and position of the face or other parts of the person in the sent image.

As set forth in claim 45, there is provided the communication apparatus according to claim 43 or 44, wherein the image feature detector detects the skin color of the person in the sent image so that the skin color of the person is not impaired by the conversion of the image properties.

As set forth in claim 4 6, there is provided a communication apparatus comprising a server connected to a network and a plurality of communication terminals each being capable of communicating with one another through the server, said communication apparatus being capable of adding a special effect to an image and sending the resulting composite image from any of the communication terminal to any other communication terminals, said server comprising: an image storage for receiving and storing an image sent from a sending communication terminal; a special effect storage unit for storing a program for adding a special effect to the sent image; a special effect selector for selecting a special effect to be added to the sent image according to an instruction provided from the sending communication terminal; a composite image confirming module for adding the special effect to the image and sending the resulting composite image to the sending communication terminal for confirmation; an image transmitter for sending the sent image to an intended receiving communication terminal in response to confirmation provided from the sending communication terminal; and an additional information transmitter for sending the program for adding a special effect to the sent image to the receiving communication terminal; said communication terminal comprising: an image viewing module for displaying the composite image received from the composite image confirming module; an image transmitter for selecting an image and sending the image to the server; a special effect specifying module for specifying a special effect to be added to the image to be sent while viewing the special effect on the image viewing module; a transmission commanding module for issuing a command for transmitting said image and the program for adding a special effect to the image to the receiving communication terminal; an image receiver for receiving the sent image from the server; an additional information receiver for receiving from the server the program for adding a special effect to the image; a terminal information acquisition module for acquiring terminal information about the intended receiving communication terminal; a special effect adding module for converting the image properties of the sent image according to the terminal information and then adding the selected special effect to the image; and a display for displaying the composite image to which the special effect is added by the special effect adding module; wherein the image properties of the sent image are converted so as to be optimally displayed on the intended receiving communication terminal, then the image to which the special effect is added is sent and received.

As set forth in claim 47, there is provided the communication apparatus according to any of claims 42, 43, 44 or 45, wherein said communication terminal comprises a program downloading module connected to the network for obtaining over the network a program for converting the image properties of the image and additional information according to the terminal information and then superimposing the additional information on a position in the image, the position being determined according to the feature of the image.

As set forth in claim 48, there is provided the communication apparatus according to claim 46, wherein said communication terminal comprises a program downloading module connected to the network for obtaining over the network a program for converting the image properties of the image according to the terminal information and adding the selected special effect to the image in the special effect adding module.

As set forth in claim 49, there is provided a communication apparatus comprising a server connected to a network and a plurality of communication terminals each being capable of communicating with one another through the server, the communication apparatus being capable of combining a plurality of images and sending the resulting composite image from any of the communication terminal to any other communication terminals, said server comprising: an image storage for receiving and storing an image sent from a sending communication terminal; an additional information storage for storing a plurality of pieces of additional information to be combined with the sent image; an additional information selector for selecting a piece of additional information to be combined with the sent image according to an instruction from the sending communication terminal; a composite image confirming module for combining the sent image with the additional information and sending the resulting composite image to the sending communication terminal for confirmation; and an additional information combining program transmitter for sending said image, said additional information, and a program for converting image properties of the send image and the additional image according to the terminal information and combining the converted image with the converted additional information; said communication terminal comprising: an image viewing module for displaying the composite image received from the composite image confirming module; an image transmitter for selecting an image and sending the image to the server; an additional information specifying module for specifying additional information to be added to the image to be sent while viewing the additional information on the image viewing module; a transmission commanding module for issuing a command for transmitting the image and a program for converting the image and the additional information according to the capabilities of a receiving communication terminal and combining the image with the additional information to the receiving communication terminal; a terminal information acquisition module for acquiring terminal information about the intended receiving communication terminal; an additional information combining program execution module for receiving the program for converting the image and the additional information according to the capabilities of a receiving communication terminal and combining the image with the additional information and executing the program to convert the image and the additional information according to the image properties of said terminal information and combine the image with the additional information; and a display for displaying the composite image generated by the additional information combining program execution module; wherein the image properties of the sent image and the additional information are converted so as to be optimally displayed on the intended receiving communication terminal, then the sent image and the additional information are combined and the resulting composite image is sent and received.

As set forth in claim 50, there is provided a communication apparatus comprising a server connected to a network and a plurality of communication terminals each being capable of communicating with one another through the server, the communication apparatus being capable of combining a plurality of images and sending the resulting composite image from any of the communication terminal to any other communication terminals, said server comprising: an image storage for receiving and storing an image sent from a sending communication terminal; an additional information storage for storing a plurality of pieces of additional information to be combined with the sent image; an additional information selector for selecting a piece of additional information to be combined with the sent image according to an instruction from the sending communication terminal; a composite image confirming module for combining the sent image with the additional information and sending the resulting composite image to the sending communication terminal for confirmation; and an additional information combining program transmitter for sending said image, said additional information, and a program for converting the image properties of the send image and the additional image according to the terminal information and combining the converted image with the converted additional information; the communication terminal comprising: an image viewing module for displaying the composite image received from the composite image confirming module; an image transmitter for selecting an image and sending the image to the server; an additional information specifying module for specifying additional information to be added to the image to be sent while viewing the additional information on the image viewing module; a transmission commanding module for issuing a command for transmitting the image and a program for converting the image and the additional information according to the capabilities of a receiving communication terminal and combining the image with the additional information to the receiving communication terminal; a terminal information acquisition module for acquiring terminal information about the intended receiving communication terminal; an image feature detector for detecting a feature of the sent image; an additional information combining program execution module for receiving the program for converting the image and the additional information according to the capabilities of a receiving communication terminal and combining the image with the additional information and executing the program to convert the image and the additional information and superimpose the additional information on a position in the sent image, according to the terminal information, the position being determined according to the feature of the image; and a display for displaying the composite image generated by the additional information combining program execution module; wherein the image properties of the sent image and the additional information are converted so as to be optimally displayed on the intended receiving communication terminal, then the sent image and the additional information are combined and the resulting composite image is sent and received.

As set forth in claim 51, there is provided the communication apparatus according to claim 50, wherein the image feature detector detects the size, position, and/or motion of a person in the sent image.

As set forth in claim 52, there is provided the communication apparatus according to claim 50, wherein the image feature detector detects the size and position of the face or other parts of the person in the sent image.

As set forth in claim 53, there is provided the communication apparatus according to claim 51 or 52, wherein the image feature detector detects the skin color of the person in the sent image so that the skin color of the person is not impaired by the conversion of the image properties.

As set forth in claim 54, there is provided a communication apparatus comprising a server connected to a network and a plurality of communication terminals each being capable of communicating with one another through the server, said communication apparatus being capable of adding a special effect to an image and sending the resulting composite image from any of the communication terminal to any other communication terminals, said server comprising: an image storage for receiving and storing an image sent from a sending communication terminal; a special effect storage for storing a program for adding a special effect to the image; a special effect selector for selecting a special effect to be added to the image according to an instruction provided from the sending communication terminal; a composite image confirming module for adding a special effect to the image and sending the resulting composite image to the sending communication terminal for confirmation; and an additional information combining program transmitter for sending the image and a program for converting the image according to the capabilities of a receiving communication terminal and generating a composite image to the receiving communication terminal; said communication terminal comprising: an image viewing module for displaying the composite image received from the composite image confirming module; an image transmitter for selecting an image and sending the image to the server; an additional information specifying module for specifying a special effect to be added to the image to be sent while viewing the special effect on the image viewing module; a transmission commanding module for issuing a command for transmitting the image and the program for converting the image according to the capabilities of a receiving communication terminal and adding the specified special effect to the converted image to the receiving communication terminal; a terminal information acquisition module for acquiring terminal information about the intended receiving communication terminal; an additional information combining program execution module for receiving the program for converting the image according to the capabilities of a receiving communication terminal and adding the specified special effect to the image and executing the program to convert the image according to the terminal information and add the selected special effect to the image; and a display for displaying the composite image to which the special effect is added by the additional information combining program execution module; wherein the image properties of the image are converted so as to be optimally displayed on the intended receiving communication terminal and then the image to which the special effect is added is sent and received.

### Brief Description of Drawings

FIG. 1 is a diagram showing a configuration of communication apparatuses according to a first embodiment of the present invention;
FIG. 2 is a flowchart of a process for inviting a conversation candidate to join a chat room;
FIG. 3 is a conceptual diagram showing an exemplary monitor screen of a personal computer of each user;
FIG. 4 is a block diagram showing a process for generating a composite image through voice information according to the first embodiment of the invention;
FIG. 5 is a diagram showing a monitor screen on which only a speaker is displayed according to the first embodiment of the present invention;
FIG. 6 is a diagram showing a monitor on which an enlarged image of the speaker is displayed according to the first embodiment of the present invention;
FIG. 7 is a diagram showing a configuration of communication apparatuses according to a second embodiment of the present invention;
FIG. 8 is a diagram showing an apparatus for performing image processing according to the second embodiment of the present invention;
FIG. 9 is a conceptual diagram of an example of image processing according to the second embodiment of the present invention;
FIG. 10 is a diagram showing a configuration of communication apparatuses according to a third embodiment of the present invention;
FIG. 11 is a block diagram of a communication apparatus according to a fourth embodiment of the present invention;
FIG. 12 is a flowchart of a process performed by the communication apparatus according to the fourth embodiment of the present invention;
FIG. 13 is a diagram of a frame image, which is an example of additional information;
FIG. 14 is a diagram showing a moving image, which is an example of additional information;
FIG. 15 is a diagram showing an example of a mail message to be sent to a receiver;
FIG. 16 (a) is a diagram showing an image to be sent from a sending terminal;
FIG. 16 (b) is a diagram showing the sent image displayed according to a receiving terminal;
FIG. 17 (a) is a diagram showing unconverted additional information;
FIG. 17 (b) is a diagram showing the additional information converted according to a receiving terminal;
FIG. 18 is a diagram showing a composite image to be sent to a receiving terminal;
FIG. 19 is a block diagram showing a configuration of a communication apparatus according to a fifth embodiment of the present invention;
FIG. 20 (a) is a diagram showing additional information according to the fifth embodiment of the present invention;
FIG. 20 (b) is a diagram showing a composite image according to the fifth embodiment of the present invention;
FIG. 21 is a block diagram of a communication apparatus according to a sixth embodiment of the present invention;
FIG. 22 (a) is a diagram showing an image to which no special effect is applied according to the sixth embodiment of the present invention;
FIG. 22 (b) is a diagram showing the image to which a special effect has been applied according to the sixth embodiment of the present invention;
FIG. 23 is a block diagram of a communication apparatus for a receiving terminal to perform composition according to a seventh embodiment of the present invention; and
FIG. 24 is a block diagram of a communication apparatus for a receiving terminal to perform composition through the use of a program according to the seventh embodiment of the present invention.

### Best Mode for Carrying Out the Invention

Embodiments of the present invention will be described below with reference to the accompanying drawings.

### (First Embodiment)

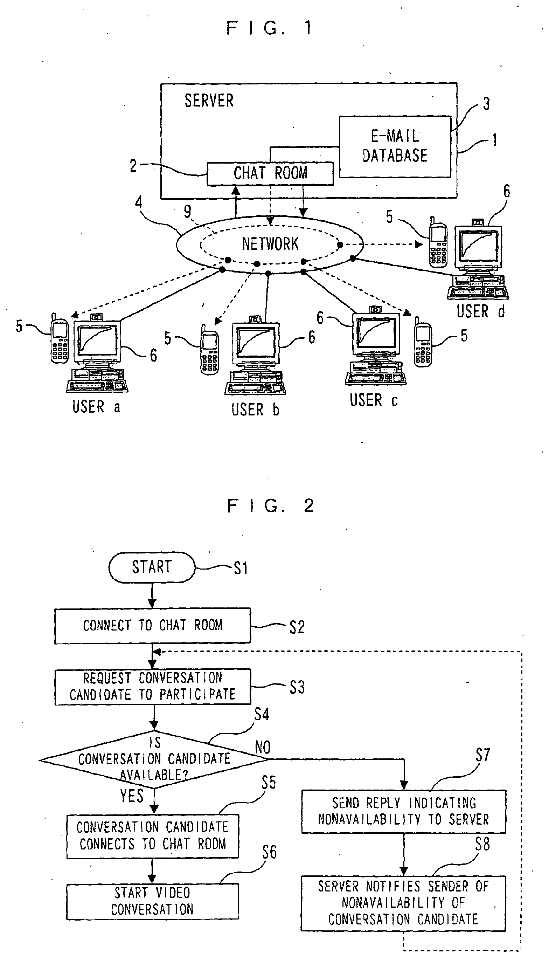

A first embodiment will be described with reference to FIGS. 1, 2, 3, 4, 5, and 6.

FIG. 1 is a diagram showing communication apparatuses according the first embodiment of the present invention. FIG. 2 shows a flowchart of a process for inviting a conversation candidate/candidates to a chat room.

In FIG. 1, reference number 1 indicates a server having an e-mail database 3 for managing the chat room 2 and e-mail addresses as identification information. Reference number 4 indicates a network that connects personal computers 6, which are communication terminals owned by a plurality of users, to the server 1. Each of the personal computers 6 has a camera as an image input device. Reference number 9 indicates a network that connects a mobile phone 5 owned by each of a plurality of users' to the server 1. In the example shown in FIG. 1, each of user a, user b, user c, and user d has a mobile phone 5 and a personal computer 6 and connects to the server 1 through the networks 9 and 4. While this embodiment is described here with respect to mobile phones 5, they may be replaced with pagers or other communication terminals, or communication terminals integrated into personal computers 6.

In FIG. 2, when a sender, user a, initiate a process (S1), user a connects to the chat room 2 from his or her personal computer on the server 1 over the network 4 (S2). Then user a requests the server to call users b, c, and d as participants in a video conversation (S3). In the example described here, e-mail addresses are specified as information identifying users. However, the real names or handles of users that are registered with the server 1 may be specified instead. One or more conversation participants can be registered. When e-mail addresses are specified, the server 1 sends e-mail to the addresses over the network 9 for indicating that user a has provided a request to join the chat room 2, in order to ascertain whether or not the users are available to join the chat room 2 (S4). Thus, users b, c, and d can know that the request to join the chat room has arrived as e-mail at their mobile phones. The users b, c, and d then can connect to the chat room 2 from their personal computers 6 over the network 4 (S5) and start video conversation (S6). If any of users b, c, and d cannot use their personal computers 6, the user responds to the request by sending e-mail for indicating that she or he cannot join the chat or some other information from his or her mobile phone 5 to the server over the network 9 (S7). The server notify the content of the e-mail to user a (S8). Knowing this circumstance, user a starts video conversation only with the users who have connected to the chat room 2. On the other hand, if no users can connected to the chat room 2, user a can disconnect from the chat room 2 or request the server to call another user (S3).

Thus, a communication apparatus can be provided that can request users of interest to connect a server on a network in order to join a conversation even if they are not connected to the Internet.

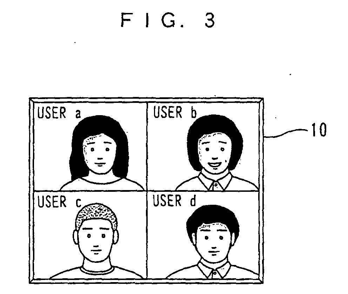

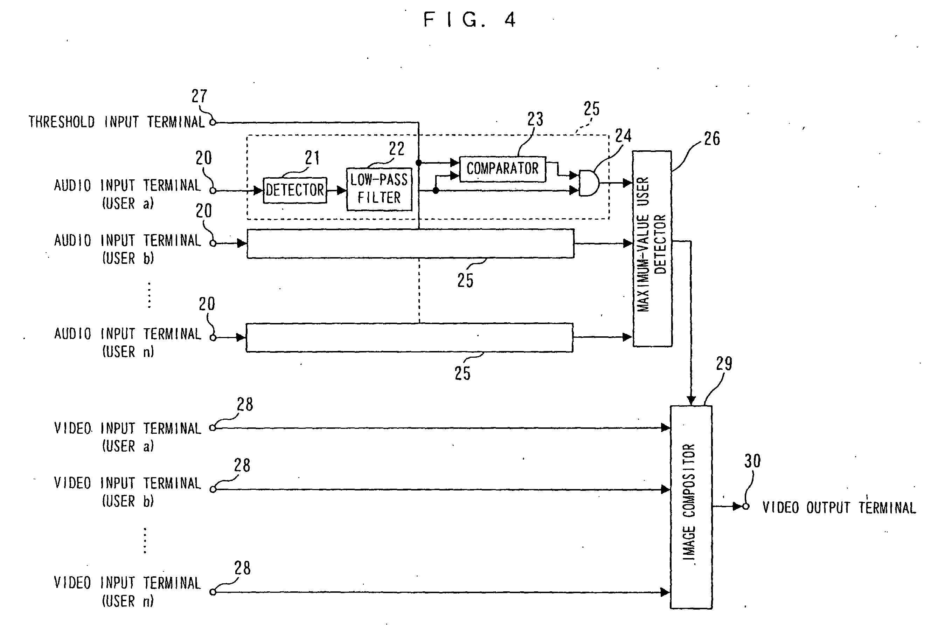

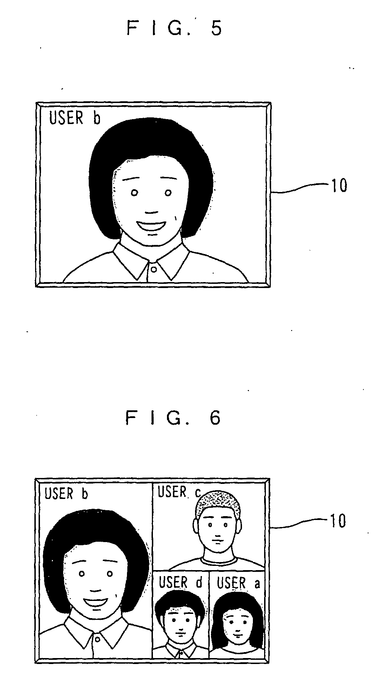

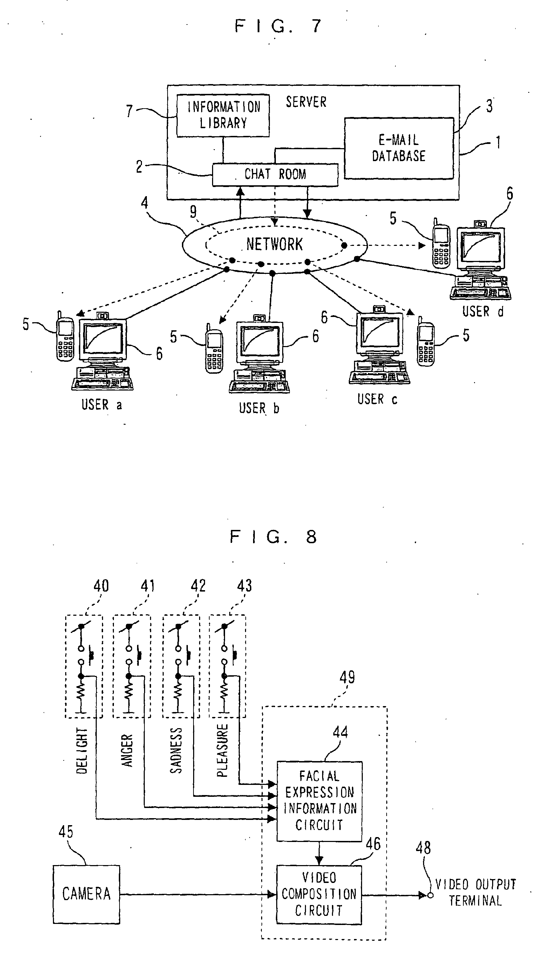

FIG. 3 is a conceptual diagram showing an example of a monitor screen of a personal computer of each user. FIG. 4 is a block diagram showing a process for generating a composite image through audio information according to the first embodiment of the present invention. FIG. 5 shows a monitor screen on which only a speaker is displayed according to the first embodiment of the present invention. FIG. 6 shows a monitor screen on which an enlarged image of the speaker is displayed according to the first embodiment of the present invention.

On the monitor screen 10 shown in FIG. 3, images captured by cameras attached to the personal computers 6 of the users are displayed. The monitor screen is split in 4 because four users are participating. If there were more participants, the monitor screen can be split in 9 or 16. The more the monitor screen is split, the smaller the display image of each user and therefore the more difficult to discern their facial expressions. In such a case, the server 1 can determine that the current speaker is user b, for example, in FIG. 3 on the basis of the presence or absence and volume of the voices of the users and automatically enlarges the display image of user b.

FIG. 4 shows a configuration where n number of users are participating. In the example shown in FIG. 3, n = 4. The portion in the dashed-line box in FIG. 4 is an audio processing block 25. The voices of each user are inputted through an audio input terminal 20, detected by a detector 21, and then integrated by a low-pass filter 22 for a certain period of time. The integral is compared in a comparator 23 with a threshold provided from a threshold input terminal 27. If the integral is greater than the threshold, the comparator 23 outputs 1. Otherwise, it outputs 0. The output of the low-pass filter 22 is ANDed with the output of the comparator 23 by a logic circuit 24 and the result is inputted into the maximum-value user detector 26. Likewise, the voices of the other users b, c, and d are also processed in the audio processing block 25. The users are ordered by the maximum-value user detector 26 according to the output values from the audio block 25. The ordinal output from the maximum-value user detector 26 is provided as a user number to an image compositor 29. If all of the users are silent, 0 is outputted to the image compositor 29. On the other hand, the image of each user is imputed from a video input terminal 28 to the image compositor 29. If the output from the maximum-value user detector 26 is 0, evenly sized images of the users are combined into one screen to produce a composite image as shown in FIG. 3. This composite image is outputted from an image output terminal 30. If the ordinal outputs from the maximum-value user detector 26 indicates the order of the users, forexample, userb-userc-userd-usera, indecreasing order of ordinal output, then the image of user b may be enlarged, outputted through the video output terminal 30 so that it is displayed on the full monitor screen 10 as shown in FIG. 5, or differently sized images of the users may be combined and outputted through the video output terminal 30 onto the monitor screen 10 as shown in FIG. 6. If the output from the maximum-value user detector 26 indicates an order different from the one provided above, an image or images are enlarged accordingly and outputted through the video output terminal 30, likewise.

The low-pass filter 22 may integrate outputs from the detector 21 for a predetermined period of time and directly output the result or calculate and output the average of the results of m consecutive integrations. The integration period and the number m of integrations for taking an average may be adjusted by taking the relationship between the state of actual conversation and the frequency of image enlargement into consideration.

While the embodiment has been described with respect to a chat as a communication tool on the Internet, the embodiment can also be used with other communication tools on the Internet such as internet-enabled telephones.

In this way, a clearer image of a speaker can be provided and therefore feelings of the speaker can be indicated to the receiver(s) during communication on the Internet.

### (Second Embodiment)

A communication apparatus according to a second embodiment of the present invention will be described with reference to FIGS. 2, 3, 7, 8, and 9.

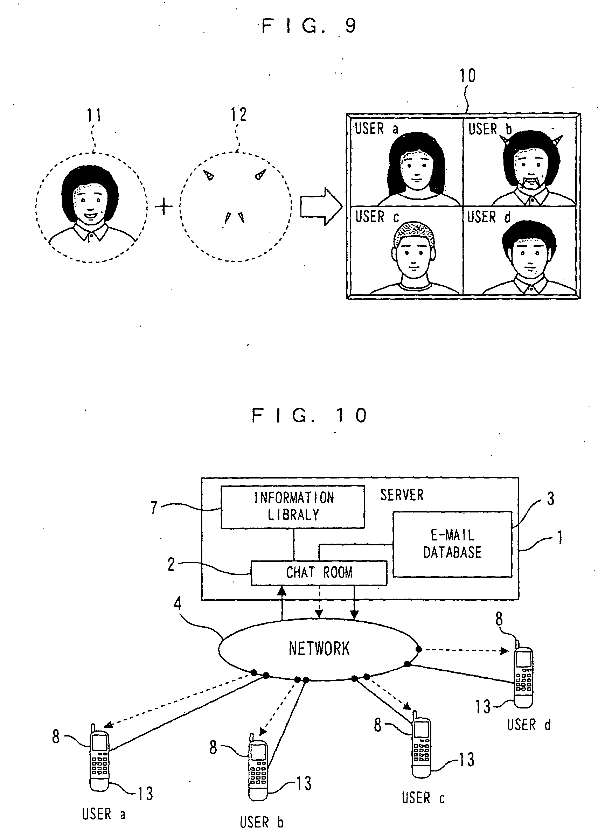

FIG. 7 is a diagram showing a configuration of communication apparatuses according to the second embodiment of the present invention. FIG. 8 is a diagram showing an apparatus for performing image processing according to the second embodiment of the present invention. FIG. 9 is a conceptual diagram of an example of image processing according to the second embodiment of the present invention.

In FIG. 7, reference number 1 denotes a server having a chat room 2, an e-mail database 3 formanaginge-mail addresses as identification information, and an information library 7 storing information for indicating emotional expressions. Reference number 4 indicates a network that connects personal computers 6, which are communication terminals owned by a plurality of users, to the server 1. Each of the personal computers 6 has a camera as an image input device. Reference number 9 indicates a network that connects a mobile phone 5 owned by each of a plurality of user's to the server 1.

In FIG. 8, switches for expressing delight, anger, sadness, and pleasure are assigned to four keys of the keyboard of each personal computer 6. These switches are denoted by reference numbers 40, 41, 42, and 43. When one of these switches 40, 41, 42, and 43 is turned on, information for expressing emotion is selected by a facial expression information circuit 44. The information selected by the facial expression information circuit 44 is combined with an image captured by a camera 45 by an image composition circuit 46 and sent through a video output terminal 48 onto the network 4.

While a facial information compositor 49 for combining facial expression information is provided on senders' personal computers 6 in this example, it may be provided on the server 1 or receivers' personal computer 6.

Information for expressing emotions is managed in the facial expression information circuit 44. However, the information may be generated by users on their personal computers 6 or other devices connected to the network 4. In addition, the information may be updated by downloading required information from the information library 7 over the network 4 and storing it in the expression information circuit 44.

The procedure for inviting participants in a conversation in the second embodiment is the same as that described with respect to the first embodiment and shown in FIG. 2. Therefore the description thereof will be omitted.

The screen shown in FIG. 3 is split into four. As with the first embodiment, the more the screen is split, the smaller the images of users and therefore the more difficult to discern their facial expressions.

If user b is annoyed by such a state during conversation and wants to communicate the emotion with a facial expression to the other users, user b presses a switch 41 corresponding to anger from among the emotional expression switches assigned to the keyboard of his or her personal computer 6. As a result, facial expression information 12 outputted from the facial expression information circuit 44 that is associated with the switch 41 is superimposed on the image 11 of user b captured by the camera and the resulting image is sent and displayed on the monitor screen 10 of each user's personal computer 6. While a case where anger is expressed has been described herein, other expressions such as delight, anger, sadness and pleasure may be expressed as well.

The positions in which facial expression information 12 is superimposed are fixed. For example, the facial expression information 12, which is horns and fangs in this example, is superimposed on the right positions with respect to the position and size of the face that are detected in the photograph 11. The positions of the facial expression information 12 therefore change according to changes in the photograph 11, that is, the movement of the face.

While graphics are used as an example of the facial expression information 12 in the description of the second embodiment, various other images such as a photograph of a celebrity or, more straightforwardly, letters can be superimposed. Furthermore, instead of the keyboard 6 of the personal computer 6, voice or facial expressions may be assigned as switches for emotional expressions and speech or image recognition may be used to match them with preset ones during conversation to turn on one of the switches.

While the embodiment has been described with respect to a chat as a communication tool on the Internet, the embodiment can also be used with other communication tools on the Internet such as internet-enabled telephones.

Thus, according to the configurations described above, a communication apparatus can be provided that has an emotional expression indicating capability that can add user's emotional expression to a message to send to the receiving user during communication on the Internet.

### (Third Embodiment)

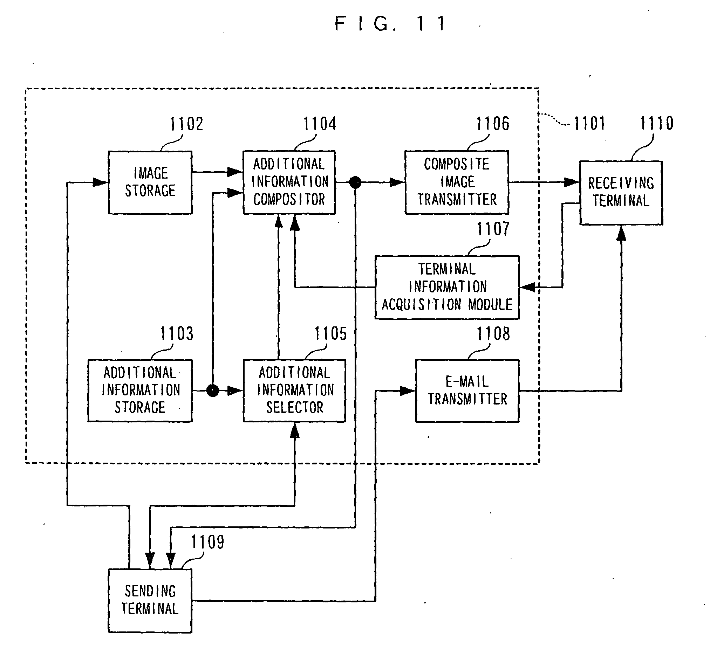

A communication apparatus according to a third embodiment of the present invention will be described below with reference to FIG. 10.

FIG. 10 shows a configuration of a communication apparatus according to the third embodiment.

In FIG. 10, reference number 1 denotes a server having a chat room 2 and an e-mail database 3 for managing e-mail addresses as identification information, and an information library 7 storing information for expressing feelings. Reference number 4 denotes a network that connects communication terminals 8 owned by a plurality of users to the server 1. Each of the communication terminals 8 shares facilities of a communication tool and facilities for inviting participants in a conversation. In addition, the communication terminal 8 includes a vibration device 13 that generates a vibration alert in the communication terminal 8 when an appropriate switch is turned on.

If, after a video conversation among a number of users starts, user a wants to indicate a feeling such as irritation or wants to attract the other user's attention, user a turns on the switch associated with the vibration device 13. This switching information is provided to the other users' communication terminals 8 through the server 1 and the network 4 to drive the vibration devices provided in the communication terminals 8 and the vibration is transmitted to the other users. Thus, user a can indicate the irritation or the intention to attract the other users' attraction to them.

Thus, according to the configurations described above, a communication apparatus can be provided that has an emotional expression indicating capability that can add user'semotional expression to a message to send to the receiving user during communication on the Internet.

Furthermore, the vibration device 13 may be used for requesting the users to connect to the server.

While the embodiment has been described with respect to a chat as a communication tool on the Internet, the embodiment can also be used with other communication tools on the Internet such as internet-enabled telephones.

Thus, a communication apparatus can be provided that allows a user who wants to perform communication on the Internet to request users of interest to connect to a server on the Internet if they are not connected to the Internet.

### (Fourth Embodiment)

A communication according to a fourth embodiment of the present invention will be described with reference to FIGS. 11, 12, 13, 14, 15, 16, 17, and 18.

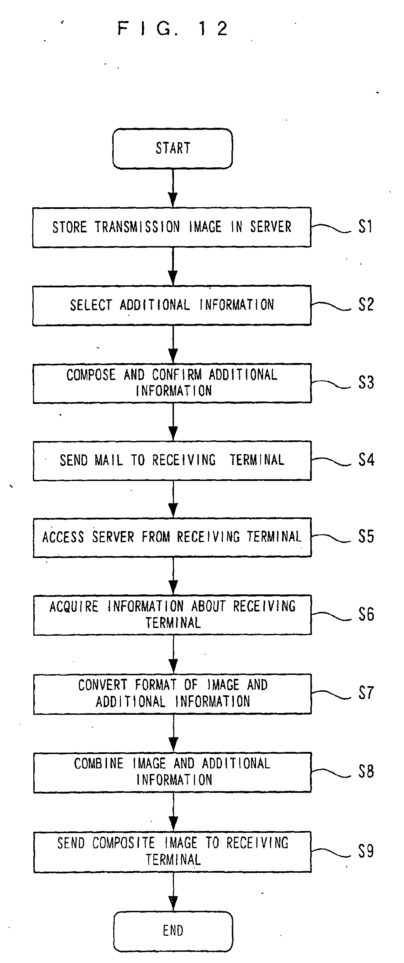

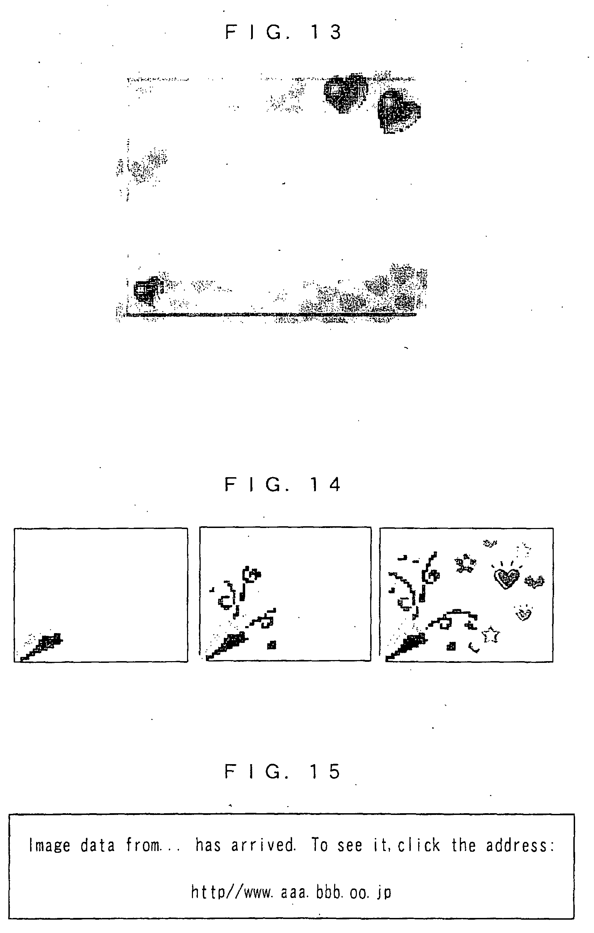

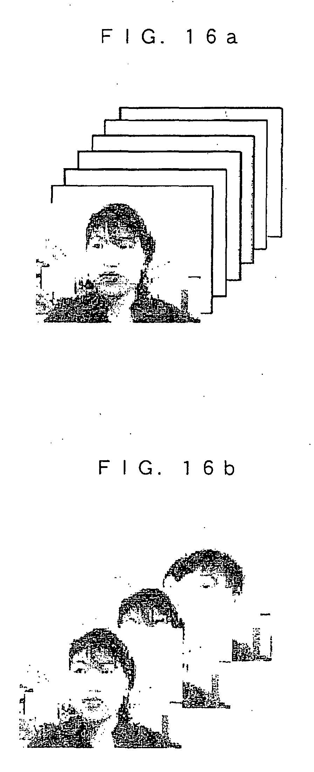

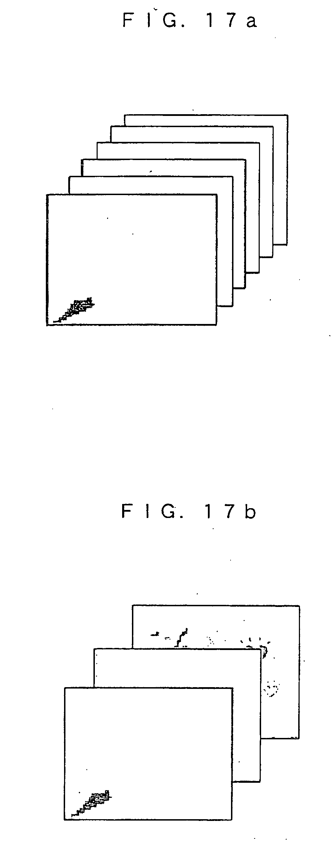

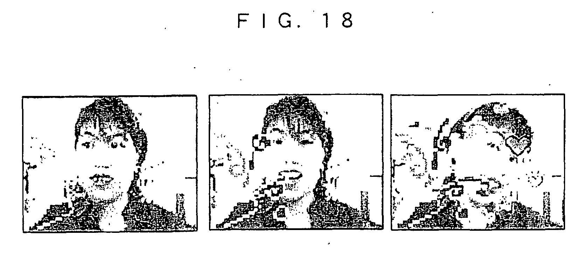

FIG. 11 is a block diagram showing a configuration of a communication apparatus according to the fourth embodiment of the present invention. FIG. 12 is a flowchart of a process performed in the communication apparatus according to the fourth embodiment of the present invention. FIG. 13 shows a frame image, which is an example of additional information. FIG. 14 shows a diagram showing a moving image as an example of additional information. FIG. 15 shows a diagram showing an example of a mail message to be sent to a receiver. FIG. 16 (a) is a diagram showing an image to be sent in a sending terminal and FIG. 16 (b) is a diagram showing the sent image displayed according to a receiving terminal. FIG. 17 (a) shows unconverted additional information and FIG. 17 (b) shows the additional information converted according to a receiving terminal. FIG. 18 shows a composite image to be sent to a receiving terminal.

In FIG. 11, reference number 1101 indicates a server, 1102 indicates an image storage, 1103 indicates an additional information storage, 1104 indicates an additional information compositor, 1105 indicates an additional information selector, 1106 indicates a composite image transmitter, 1107 indicates a terminal information acquisition module, 1108 indicates an e-mail transmitter, 1109 indicates a sending terminal, and 1110 indicates a receiving terminal.

An operation of the apparatus will be described with reference to FIGS. 11, 12, 13, 14, and 15.

The server 1101 sends a synthesized image with additional information added to an image by a sender with the sending terminal 1109 to a receiver.

The most commonly used sending and receiving terminals 1109 and 1110 are mobile phones. With the explosion in the use of mobile phones with cameras in recent years, it has become commonplace to send a photograph taken by a user to his/her friend's mobile phone. The communication apparatus of the present invention allows a user to add additional information such as animation, for example, to a picture taken by the user before sending so that an elaborated image or content is sent.

While the present embodiment will be described with respect to an image as an example of information to be added, other data such as text or music can be added.

FIG. 13 shows a still image commonly called a frame image. When this frame image is superimposed on a moving image, the frame image does not moves while the moving image is moving. FIG. 14 shows another example in which added image also moves. While only three pictures are shown in FIG. 14, more pictures, or as many pictures as required according to the state of the moving image are stored.

Although both moving and still images can be sent, an example in which a moving image is sent will be described below.

First, a sender stores an image to be sent to a receiver's receiving terminal 1110 in the image storage 1102 of the server 1101 from a sending terminal 1109 (S1). This process is commonly known as upload of the image. The image to be sent is typically a picture taken with a camera contained in a mobile phone. However, images obtained with any other means may be used.

Then, the sender uses the additional information selector 1105 to select additional information to be added to the image to be sent from the additional image storage 1103 containing additional information to be added to images to be sent (S2). The sender previews additional information as shown in FIGS. 13 and 14 that is sent from the additional information selector 1105 and selects a piece of additional information.

The additional information compositor 1104 combines the image stored in the image storage 1102 with the additional information selected by the sender from the additional information storage 1103. The composite image data is sent to the sending terminal so that the sender can confirm and select it (S3). The composite image is recomposed according to a format that can be displayed on the receiving terminal 1110 and then sent to the terminal 1110, as will be described later.

If the sender's sending terminal 1109 and the receiver's receiving terminal 1110 are of the same model and use the same communication company, then the receiver can see exactly the same image as the one viewed on the sending terminal 1109. However, in many cases the sending terminals 1109 and the receiving terminal 1110 are of different models and use different communication companies. As a result, the receiving terminal 1110 possibly cannot display or cannot properly display the composite image. For example, if the sending terminal 1109 supports MPEG4, which is the international standard for motion pictures, generates the composite image based on MPEG4, and sends it to the receiving terminal 1110 but the receiving terminal 1110 does not support MPEG4, the composite image received at the receiving terminal 1110 cannot be displayed on the receiving terminal 1110.

Therefore, the communication apparatus according to the fourth embodiment obtains information about the receiving terminal 1110, uses the information to convert the image in the image storage 1102 and the additional information in the additional information storage 1103 into a format that can be displayed on the receiving terminal 1110, then combines them with each other in the additional information compositor 1104 and sends the resulting image to the receiving terminal 1110.

For that purpose, the apparatus obtains the format supported by the receiving terminal 1110 through the terminal information acquisition module 1107. This is done because most senders do not hold information about the models of receiving terminals owned by receivers and the information must automatically be obtained.

Therefore, when the sender sends the image combined with the additional information to the receiver, the server 1101 first sends mail to the receiver through the e-mail transmitter 1108 (S4) , rather than immediately sending the composite image. The mail message prompts the receiver to access the server 1101 as shown in FIG. 15. In this example, it prompts the receiver to click the URL of the server 1101.

The receiver clicks the URL contained in the e-mail to access the sever 1101 (S5). On accessing the server 1101, the receiving terminal 1110 sends information about the terminal such as hardware capabilities, including the size of its display screen, display colors supported, and the CPU throughput, and the type of its browser and image formats supported. The terminal information acquisition module 1107 receives the information (S6) and sends information required for adding images to the additional information compositor 1104.

The additional information compositor 1104 converts the format of the image stored in the image storage 1102 and the additional information in the additional information storage 1103 according to the display capabilities and an image format supported by the receiving terminal 1110 (S7). It then combines the image and the additional information (S8). Finally, the composite image is sent from the server 1101 to the receiving terminal 1110 (S9). Thus, the receiver can see the composite image on the receiving terminal 1110.

The image conversion and composition will be described in detail with reference to FIGS. 11, 16, 17, and 18.

A case will be described in which a sequence of MPEG4 images as shown in FIG. 16 (a) are stored in the image storage 1102 and a sender selects animation with plot as shown in FIG. 17 (a) which is stored in the additional information storage 1103, as additional information to superimpose it on the images.

First, if the terminal information acquisition module 1107 determines that the receiving terminal 1110 supports animation GIF, rather than MPEG4, as the format of moving images and can display only three image due to its display capabilities, then the additional information compositor 1104 selects three images from among the MPEG4 images stored in the image storage 1102, as shown in FIG. 16 (b). The three pictures selected may be the first image, an intermediate image, and the last image, or may be the three most significantly varying pictures. Three pictures are selected from animation which is additional information stored in the additional information storage 1103, as shown in FIG. 17 (b).

The additional information compositor 1104 then converts the selected image and animation according to information provided from the terminal information acquisition module 1107 such as the display size, display capacity, display colors of the receiving terminal 1110 and combines them as shown in FIG. 18.

The composite image is sent through the composite image transmitter 1106 to the receiving terminal 1110 and the receiver can view the composite image optimized for the receiving terminal 1110.

The series of operations are automatically performed in the server 1101. All that required to be performed by the sender is to send out the image combined with the additional image to the receiver. The server 1101 adapts the image to the capabilities of the receiving terminal 1110 and transfers it.

In this way, when a communication terminal such as a mobile phone sends and receives data including an image, the image and additional information added to it are converted to suit the capabilities of that receiving communication terminal. Therefore, any image can be properly displayed according to the capabilities of the receiving terminal.

Furthermore, when the image properties of an image stored in the image storage unit 1102 and additional information in the additional information storage 1103 are converted in accordance with the display capabilities and an image format supported by the receiving terminal 1110 and the images are combined, additional information image is resized and the number of colors are reduced. A number of versions of additional information having different image sizes and colors may be provided so that the most appropriate one can be selected.

In particular, after an image is selected from the additional information stored in the additional information storage 1103, the image should be scaled up or down or the number of colors in the image should be reduced to suit a receiving terminal 1110. The receiving terminal typically is a mobile phone, which has a display screen of small size. When the size of additional information is reduced, it can be difficult to identify what information is displayed. For example, if the additional information is letters, reduction in size of the letters can make them unreadable. Furthermore, when the number of colors is reduced to automatically optimize the additional information, it can be difficult to determine what colors will ultimately be used. As a result, the appearance of the additional information can be altered unexpectedly.

Therefore, a number of versions of additional information that would not become unreadable when their sizes are reduced are provided beforehand. In addition, a number of versions of each additional information that would not take on a strange appearance with a smaller number of colors are provided. Then, the most appropriate combination is selected from the additional information stored in the additional storage 1103 and superimposed on an image by the additional information compositor 1104. For letters, a number of font sizes are provided so that the most suitable font size for the receiving terminal 1110 is selected. Thus, the most suitable image can be sent to the receiving terminal.

While the image to be sent and the additional information are separately undergo the image property conversion and are combined in the sever and then sent to the receiving terminal in the foregoing description, the image and the additional information may be sent from the server to the receiving terminal, where they may undergo the image property conversion and combination.

### (Fifth Embodiment)

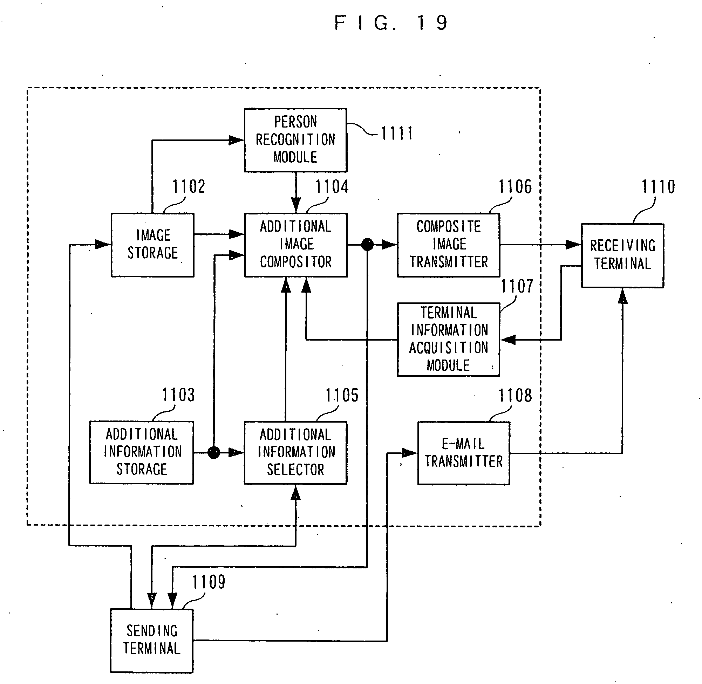

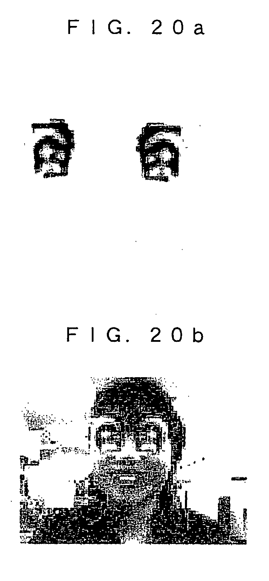

A communication apparatus according to a fifth embodiment of the present invention will be described with reference to FIGS. 19 and 20.

FIG. 19 is a block diagram of a communication apparatus according to the fifth embodiment of the present invention. FIG. 20 (a) shows additional information according to the fifth embodiment and FIG. 20 (b) shows a composite image according to the fifth embodiment of the present invention.

The communication apparatus shown in FIG. 19 is basically the same as that of the fourth embodiment, except that a person recognition module 1111 is provided. Like the one according to the fourth embodiment, the communication apparatus according to the fifth embodiment obtains information about a receiving terminal 1110, converts an image in an image storage 1102 and additional information in an additional information storage 1103 into a format supported by the receiving terminal 1110, then combines them in an additional information compositor 1104 and sends the composite image to the receiving terminal 1110.

The person recognition module 1111 identifies the position of body parts such as the face, eyes, and mouth of a person in an image stored in the image storage unit 1102. The person recognition is accomplished by using technologies such as skin color detection and eye and mouth pattern matching.

The additional information compositor 1104 converts the image properties of the image stored in the image storage 1102 and additional information in the additional information storage 1103 according to the display capabilities and an image format supported by the receiving terminal 1110 and combines them with each other. The way they are combined is varied in accordance with the size, position, and motion of the person in the image in the image storage 1102.

For example, if the sender selects an eye animation image as shown in FIG. 20 (a) as additional information to superimpose it on an image stored in the image storage 1102, the eyes of the person in the image is identified and the position and size of the eyes are detected by the person recognition module 1111 and the eye animation image is resized to fit the detected size and superimposed on the position of the eyes to provide an image as shown in FIG. 20 (b). The size of the animation superimposed may be changed in accordance with the display size of the receiving terminal. For example, if the display size is small, the animation may be made 1.5 times larger than its normal size and superimposed on the image. This prevents the superimposed image from becoming too small to be distinct to the eye.

Moreover, the way of superimposition may be varied in accordance with the motion of the person.

It has been described in the fourth embodiment that if the terminal information acquisition module 1107 determines that the receiving terminal supports animation GIF, instead of MPEG4, as the format of moving images and only three pictures can be selected from MPEG4 pictures due to the display capabilities of the animation GIF, the three image may be the first image, an intermediate image, and the last image or may be the three most significantly varying pictures.

In the fifth embodiment, three pictures which considerably differ in the motion of the person can be selected and combined. The pictures that best characterize an image can be selected in this way. Consequently, the most appropriate image combined with additional information can be generated and sent to the receiving terminal 1110.

If the display capability of the receiving terminal 1110 necessitates the use of animation GIF and a base image is in full color, color reduction must be performed. The color reduction may result in an inappropriate color of the face because the number of available colors is limited and an appropriate skin color is not assigned to the face. Therefore, if the presence of a person is recognized by the person recognition module 1111, color reduction is performed in such a way that the skin color is simply not impaired by the color reduction. Consequently, the image can be sent without impairing the skin color of the person.

In this way, before data including a picture of a person is sent and transmitted by a communication terminal such as a mobile phone, the image and additional information are properly converted to suit the capabilities of the receiving terminal. Thus, any image can be properly displayed according to the capabilities of the receiving terminal.

While the image to be sent and the additional information are separately undergo the image property conversion and are combined in the sever and then sent to the receiving terminal in the foregoing description, the image and the additional information may be sent from the server to the receiving terminal, where they may undergo the image property conversion and combination.

### (Sixth Embodiment)

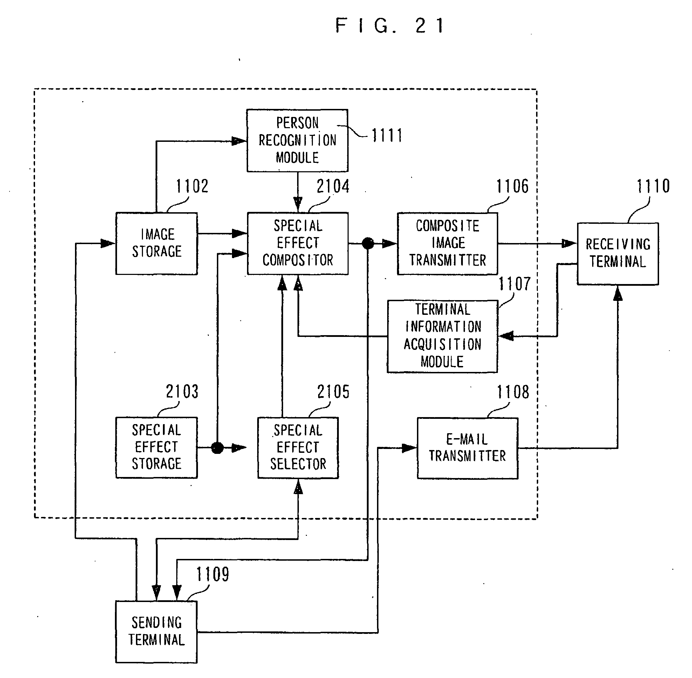

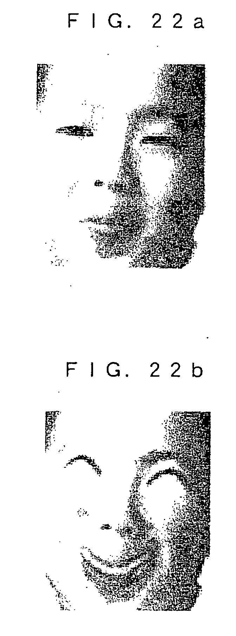

A communication apparatus according to a sixth embodiment of the present invention will be described with reference to FIGS. 21 and 22.

FIG. 21 is a block diagram of a configuration of a communication apparatus according to a sixth embodiment of the present invention. FIG. 22 (a) shows an image to which no special effect is applied according to the sixth embodiment and FIG. 22 (b) shows the image to which a special effect has been applied to distort some parts of the image of a face according to the sixth embodiment.

The communication apparatus shown in FIG. 21 is basically the same as that of the fifth embodiment, except that a special effect storage 2103, a special effect compositor 2104, and a special effect selector 2104 are provided instead of the additional information storage 1103, additional information compositor 1104, and additional information selector 1105, respectively.

According to the sixth embodiment, a special effect is applied to an image stored in an image storage 1102. A special effect herein referred to effects that alters the shape of facial features as shown in FIG. 22 or enlarges the eyes.

To apply a special effect, a person in an image in the image storage 1102 is recognized and the position of the face and parts of the face such as the eyes and mouth are recognized by a person recognition module 1111. The person recognition is accomplished by using technologies such as skin color detection and eye and mouth pattern matching.

The special effect compositor 2104 converts image properties of an image to which a special effect is applied to suit the display capabilities and the image format supported by the receiving terminal 1110. For example, if the display size of the receiving terminal 1110 is small and the degree of a change to an image is small, the special effect cannot be distinct to the eye. Therefore, before the special effect is applied to the image, image properties of the image are converted to increase the degree of the change so that the special effect becomes distinctive on the receiving terminal 1110.

In another example, if the presence of a person is recognized by the person recognition module 1111, color reduction is performed in such a way that the skin color of the person is simply not impaired. In this way, loss of the skin color can be prevented.

In this way, before data including a special-effect image is sent and transmitted by a communication terminal such as a mobile phone, the image is properly converted to suit the capabilities of the receiving terminal. Thus, any image can be properly displayed according to the capabilities of the receiving terminal.

While the image to be sent and the additional information are separately undergo the image property conversion and are combined in the sever and then sent to the receiving terminal in the foregoing description, the image and the additional information may be sent from the server to the receiving terminal, where they may undergo the image property conversion and combination.

### (Seventh Embodiment)

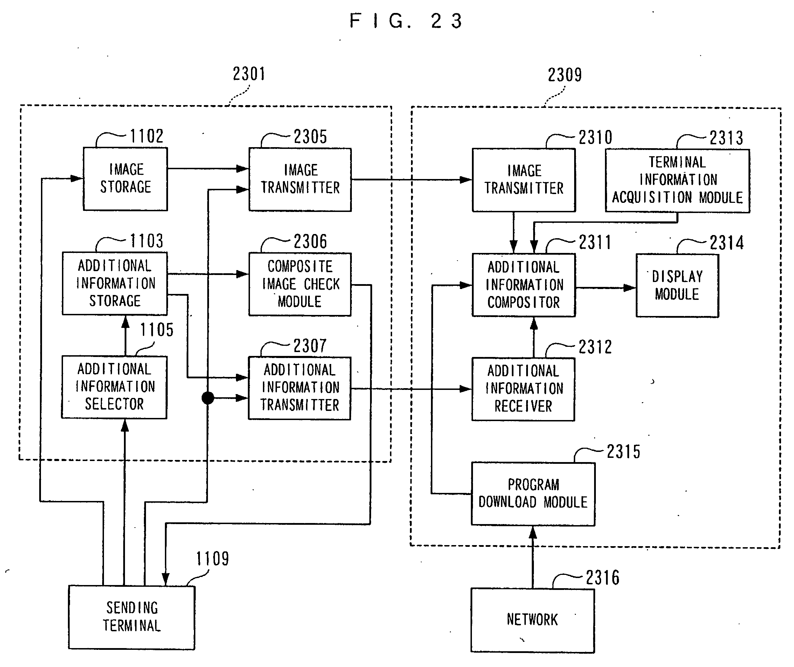

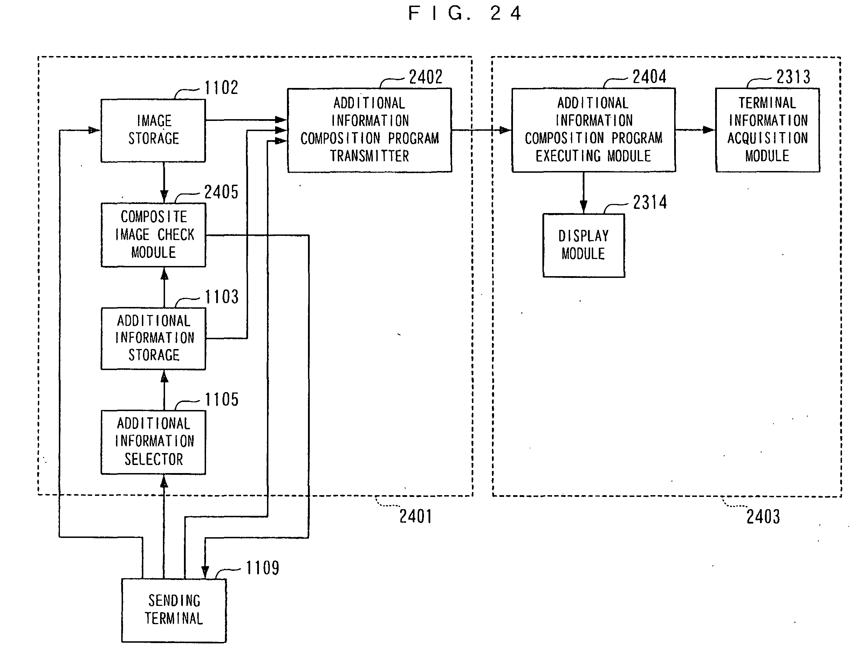

A communication apparatus according to a seventh embodiment will be described below with reference to FIGS. 23 and 24.

FIG. 23 is a block diagram of a communication apparatus that performs image composition in a receiving terminal according to the seventh embodiment of the present invention. FIG. 24 is a block diagram of a communication apparatus that performs image composition through the use of a program in a receiving terminal according to the seventh embodiment of the present invention.

In the embodiments described above, the server converts the image properties of an image to be sent and additional information to suit a receiving terminal, combines the resulting images into a composite image, and then sends it to the receiving terminal. However, the receiving terminal may convert the image properties of an image and additional information that it received to appropriate image properties and combines the images.

In FIG. 23, a server 2301 comprises an image storage 1102 for storing images sent from a sending terminal 1109, an additional information selector 1105 for selecting a piece of additional information to be combined with an image to be sent, an additional information storage 1103 for storing the selected additional information, an additional information compositor 1104 for combining the image with the additional information into a composite image and sending the composite image to the sending terminal, an image transmitter 2305 for sending the image to a receiving terminal 2309, and an additional image transmitter 2307 for sending the additional image to the receiving terminal 2309. The receiving terminal 2309 comprises an image receiver 2310 for receiving an image sent from the image transmitter 2305 of the server 2301, an additional information receiver 2312 for receiving additional information sent from the additional information transmitter 2307 of the server 2301, an additional information compositor 2311 for converting the image properties of the sent image and additional information according to the terminal information on the receiving terminal 2309 obtained in the terminal information acquisition module 2313 and combining them into a composite image, a display 2314 for displaying the composite image produced by the additional information compositor 2311, and a program download module 2315 for obtaining a program for converting the image and additional information over a network 2316.

A process performed by these components will be described below.

First, when a sender wants to send a composite image produced from an image and a selected piece of additional information from the sending terminal 1109 as in the fourth embodiment, the server 2301 in the seventh embodiment does not perform conversion nor combination but separately sends the image to be sent and additional information through the image transmitter 2305 and the additional information transmitter 2307 to the receiving terminal 2309.

Omitted from FIG. 23 are modules for confirming a composite image produced in the server 2301, modules for selecting additional information, modules for selecting an image to be sent, and modules for sending the image and additional information to a receiving terminal in the sending terminal 1109.

Next, in the receiving terminal 2309, the additional information compositor 2311 uses the terminal information about the receiving terminal 2309 to convert the image received through the image receiver 2310 and the additional information received through the additional information receiver 2312 into an image and additional information having image properties that can properly be displayed on the receiving terminal and then combines them with each other.

Finally, the composite image is displayed on the display 2314 of the receiving terminal 2309.

The program for the additional information compositor 2311 to convert the image and additional information can be obtained at the program download module 2315 over the network 2316. Consequently, up-to-data or optimum conversion can be performed.

A program for combining the image with the additional information after their image properties are converted to suit to the terminal information may be sent from the server 2301 to the receiving terminal 2309 along with the image and additional information, thereby allowing the receiving terminal 2309 to combine the image with the additional information after image property conversion.

In FIG. 24, a sever 2401 comprises an image storage 1102, a composite image check module 2405, an additional information storage 1103, an additional information selector 1105, and an additional information composition program transmitter 2402 for sending an image to be sent to a receiving terminal 2403, additional information, and a program for optimally converting the image and additional information and then combining the image and the additional information. The receiving terminal 2403 comprises a terminal information acquisition module 2313, a display 2314, and an additional information composition program execution module 2404 for converting the image properties of the received image and the additional information to suit to the terminal information according to the data sent from the additional information composition program transmitter 2402 and combining them.

The additional information composition program contains a program for obtaining terminal information from the receiving terminal 2403.

In the configuration described above, instead of the additional information compositionmodule 2311 converting the image properties of an image and additional information and combining them, the additional information composition program execution module 2404 uses terminal information, a received image and additional information, and the program for converting the image properties of the received image and additional information according to the terminal information and combining the converted image with additional information to convert the image properties of the image and additional information according to the terminal information and then combine them so that the composite image can be properly displayed on the receiving terminal.

The additional information composition program may be written in a platform-independent program language such as JAVA® so as to support a wide range of machine models.

According to the embodiment as described above, before data including a special-effect image is sent and transmitted by a communication terminal such as a mobile phone, the image is properly converted in the receiving terminal to suit the capabilities of the receiving terminal. Thus, any image can be readily and properly displayed according to the capabilities of the receiving terminal. Furthermore, even if an image is sent to a plurality of receiving terminals, the image can be properly displayed according to the capabilities of each receiving terminals in a single process because the conversion and combination process is performed in each receiving terminal without the need for the server to perform conversion and combination for each receiving communication terminal.

In summary, the communication apparatus of the present invention allows a user to send a request for participating in a conversation to a communication terminal of a user of interest in order to initiate communication over the Internet so that the sender can request the user of interest to connect to the Internet if the user of interest is not connected to the Internet.

Moreover, when users perform communication over the Internet while displaying images provided from each other, images indicating feelings that are stored in a library can be combined with the images to be transmitted. Thus, the users can indicate their feelings during the communication over the Internet.

Furthermore, when an image is transmitted between communication terminals such as mobile phones, the image can properly be displayed on the receiving communication terminal because the image properties of the image are converted according to the capabilities of the receiving terminal.

Moreover, when a plurality of images are combined or an modification is made to an image in communication terminals such as mobile phones before transmission, the image properties of each image are converted to suit the capabilities of a receiving communication terminal before the combination or modification. In this way, any image can be properly displayed in accordance with the capabilities of the receiving terminal.

## Claims

1. A communication apparatus for performing conversation over the Internet, comprising:
a plurality of first communication terminals each having a module for shooting an image of a speaker and a module for displaying the images of all participants in a conversation, said first communication terminal enabling conversation over the Internet while displaying the image of the speaker;
second communication terminals provided correspondingly to said first communication terminals;
a server for performing internet communication;
a first communication link for connecting said server with said first communication terminals; and
a second communication link for connecting said server with said second communication terminals;
wherein, when a conversation over the Internet is initiated from one of said first communication terminals, a request for participating in the conversation is sent to one or more of the second communication terminals owned by one or more intended conversation partners.

2. The communication apparatus according to claim 1, wherein if any of the requested conversation partners cannot participant in the conversation, information indicating the existence of an unavailable conversation partner and any information provided by the unavailable conversation partner are sent from the second communication terminal to said server and said server sends the information indicating the existence of the unavailable conversation partner and the information provided by said unavailable conversation partner to the first communication terminals of the other intended conversation partners.

3. The communication apparatus according to claim 1 or 2, wherein said second communication terminal is an e-mail-enabled mobile phone.

4. The communication apparatus according to claim 1 or 2, wherein said second communication terminal is a pager.

5. The communication apparatus according to claim 1 or 2, wherein an e-mail-enabled mobile phone is used as both of said first and second communication terminals.

6. The communication apparatus according to claim 5, wherein one communication link is used as both of said first and second communication links to connect to said server.

7. The communication apparatus according to any of the preceding claims, wherein a real name or a handle is used as information for identifying each of said intended conversation partners.

8. The communication apparatus according to any of claims 1, 2, 3, 4, 5, or 6, wherein an e-mail address is used as information for identifying each of said intended conversation partners.

9. A communication apparatus for performing conversation over the Internet, comprising:
a plurality of communication terminals each having a module for capturing an image of a person performing communication, a module for displaying images of all participants in the communication, a switch for adding image information, and a module for selecting emotion-indicating image information indicating emotion, for performing communication over the Internet;
a server for performing internet communication;
a communication link for connecting said server with said communication terminals; and
a storage for storing said emotion-indicating image information;
wherein the emotion-indicating image information selectedby said module for selecting emotion-indicating image information is combined with the image captured by said image capturing module in response to an instruction provided through said image information adding switch and the resulting composite image is displayed on said image displaying module.

10. The communication apparatus according to claim 9, wherein the emotion-indicating image information selected by said module for selecting emotion-indicating image information and the image captured by said image capturing module are combined at a communication terminal having selected the image information and the resulting composite image is sent to a communication terminal of an intended recipient of the communication through said server and displayed on the image displaying module of the communication terminal of the intended recipient of the communication.

11. The communication apparatus according to claim 9, wherein the emotion-indicating image information selected by said module for selecting emotion-indicating image information and the image captured by said image capturing module are combined at the server, sent to the communication terminal of the intended recipient of the communication, and displayed on the image displaying module of the communication terminal of the intended recipient of the communication.

12. The communication apparatus according to claim 9, wherein the emotion-indicating image information selected by said module for selecting emotion-indicating image information and the image captured by said image capturing module are sent to the communication terminal of the intended recipient of the communication, combined at the communication terminal of the intended recipient of the communication, and displayed on the image displaying module.

13. The communication apparatus according to claim 9, wherein the emotion-indicating image information selected by said module for selecting emotion-indicating image information changes its position and shape of composition with the image captured by said image capturing module according to a change in the captured image.

14. The communication apparatus according to claim 13, wherein the change in the image captured by said image capturing module is the change of a position of a face of a person in the image.

15. The communication apparatus according to claim 9, wherein the instruction provided through said information adding switch is mechanically and directly provided by a sender.

16. The communication apparatus according to claim 9, wherein said image information adding switch has a storage containing an audio keyword and an instruction for adding image information is determined on the basis of whether or not a voice in the communication matches said audio keywords.

17. The communication apparatus according to claim 9, wherein said information adding switch has a storage containing any one facial expression image and an instruction for adding image information is determined on the basis of whether or not an image matches said facial expression image.

18. The communication apparatus according to claim 9, wherein any of the emotion-indicating image information stored in said server is obtained and combined with the image captured.

19. The communication apparatus according to claim 9, wherein emotion-indicating image information created in a device connected to said server is obtained and combined with the image captured.

20. The communication apparatus according to claim 9, wherein the emotion-indicating image information is graphics.

21. The communication apparatus according to claim 9, wherein said emotion-indicating image information is a natural image.

22. The communication apparatus according to claim 9, wherein said emotion-indicating image information is a character or symbol.

23. The communication apparatus according to any of claims 1, 2, or 9, wherein, when said communication is performed with voice conversation, in said server the volume of the voice in the conversation is used to identify a speaker and a zoomed image of said speaker is displayed on said image displaying module.

24. The communication apparatus according to any of claims 1, 2, or 9, wherein, when said communication is performed with voice conversation, an audio waveform of voice of each speaker in the conversation is rectified and rectified direct-current components are integrated for a certain unit of time to give an integral, in said server, and if the integral associated with any participant in the conversation exceeds a predetermined threshold, the image of the participant is zoomed, and if there is no participant whose associated integral exceeds said threshold, evenly sized images of the participants in the conversation are displayed on said image displaying module.

25. The communication apparatus according to any of claims 1, 2 or 9, wherein, when said communication is performed with voice conversation, an audio waveform of voice of each speaker in the conversation is rectified and rectified direct-current components are integrated for a certain unit of time, and an average of integrals calculated for a plurality of units of time is given, in said server, and if the average integral associated with any participant in the conversation exceeds a predetermined threshold, the image of the participant is zoomed, and if there is no participant whose associated integral exceeds said threshold, evenly sized images of the participants in the conversation are displayed on said image displaying module.

26. The communication apparatus according to claim 1 or 2, wherein a vibration device is provided in said second communication terminals and a request for participating in communication is made by activating the vibration device in said second communication terminals of intended recipients of the communication.

27. The communication apparatus according to claim 9, wherein a vibration device is provided in said communication terminals and a request for participating in communication is made by activating the vibration device in said communication terminals of intended recipients of the communication.

28. The communication apparatus according to claim 9, wherein a vibration device for indicating emotion by vibration and a switch for activating the vibration of said vibration device of an intended recipient of communication are provided in said communication terminals and said vibration device is activated by an instruction provided through said switch to transmit an emotion to the intended recipient of the communication.

29. A communication apparatus comprising a server connected to a network and a plurality of communication terminals each being capable of communicating with one another through said server, said communication apparatus being capable of combining a plurality of images and sending the resulting composite image from any of said communication terminal to any other communication terminals,
said server comprising:
an image storage for receiving and storing an image sent from a sending communication terminal;
an additional information storage for storing a plurality of pieces of additional information to be combined with said sent image;
an additional information selector for selecting a piece of additional information to be combined with the sent image according to an instruction from said sending communication terminal;
a terminal information requesting module for requesting an intended receiving communication terminal to send terminal information about said receiving communication terminal;
a terminal information acquisition module for receiving said terminal information sent form said receiving communication terminal;
an additional information combining module for converting the image properties of said sent image and said additional information according to said terminal information and combining converted said image with said converted additional information; and
a composite image transmitter for sending the composite image to said receiving communication terminal;
wherein the image properties of said sent image and said additional information are converted so as to be optimally displayed on said intended receiving communication terminal, then said sent image and said additional information are combined and the resulting composite image is sent and received.

30. A communication apparatus comprising a server connected to a network and a plurality of communication terminals each being capable of communicating with one another through said server, said communication apparatus being capable of combining a plurality of images and sending the resulting composite image from any of said communication terminal to any other communication terminals,
said server comprising:
an image storage for receiving and storing an image sent from a sending communication terminal;
an additional information storage for storing a plurality of pieces of additional information to be combined with said sent image and different versions of each piece of additional information, said versions having different image properties;
an additional information selector for selecting a piece of additional information to be combined with the sent image according to an instruction from said sending communication terminal;
a terminal information requesting module for requesting a receiving communication terminal to send terminal information about said receiving communication terminal;
a terminal information acquisition module for receiving said terminal information sent form said receiving communication terminal;
an additional information selector for selecting the most suitable version of additional information for said receiving communication terminal according to said terminal information from among versions of the additional information selected in response to an instruction provided from said sending communication terminal;
an additional information combining module for converting the image properties of said sent image according to said terminal information and combining said converted image with said selected additional information; and
a composite image transmitter for sending the composite image to said receiving communication terminal;
wherein
the image properties of said sent image is converted so as to be optimally displayed on said intended receiving communication terminal, the additional information is selected and combined with said sent image, and the resulting composite image is sent and received.

31. A communication apparatus comprising a server connected to a network and a plurality of communication terminals each being capable of communicating with one another through said server, said communication apparatus being capable of combining a plurality of images and sending the resulting composite image from any of said communication terminal to any other communication terminals,
said server comprising:
an image storage for receiving and storing an image sent from a sending communication terminal;
an additional information storage for storing a plurality of pieces of additional information to be combined with said sent image;
an additional information selector for selecting a piece of additional information to be combined with the sent image according to an instruction from said sending communication terminal;
a terminal information requesting module for requesting an intended receiving communication terminal to send terminal information about said receiving communication terminal;
a terminal information acquisition module for receiving said terminal information sent from said receiving communication terminal;
an image feature detector for detecting a feature of said sent image;
an additional information combining module for converting image properties of said sent image and said additional information according to said terminal information and then superimposing said additional information on a position in said sent image, said position being determined according to the feature of said sent image; and
a composite image transmitter for sending the composite image to said receiving communication terminal;
wherein the image properties of said sent image and said additional information are converted so as to be optimally displayed on said intended receiving communication terminal, then said sent image and said additional information are combined and the resulting composite image is sent and received.

32. A communication apparatus comprising a server connected to a network and a plurality of communication terminals each being capable of communicating with one another through said server, said communication apparatus being capable of combining a plurality of images and sending the resulting composite image from any of said communication terminal to any other communication terminals,
said server comprising:
an image storage for receiving and storing an image sent from a sending communication terminal;
an additional information storage for storing a plurality of pieces of additional information to be combined with said sent image and different versions of each piece of additional information, said versions having different image properties;
an additional information selector for selecting a piece of additional information to be combined with the sent image according to an instruction from said sending communication terminal;
a terminal information requesting module for requesting an intended receiving communication terminal to send terminal information about said receiving communication terminal;
a terminal information acquisition module for receiving said terminal information sent form said receiving communication terminal;
an additional information selector for selecting the most suitable version of additional information for said receiving communication terminal according to said terminal information from among versions of the additional information selected in response to an instruction provided from said sending communication terminal;
an image feature detector for detecting a feature of said sent image;
an additional information combining module for converting the image properties of said sent image according to said terminal information and then superimposing said selected additional information on a position in said sent image, said position being determined according to the feature of said sent image; and
a composite image transmitter for sending the composite image to said receiving communication terminal;
wherein the image properties of said sent image is converted so as to be optimally displayed on said intended receiving communication terminal, the additional information is selected and combined with said sent image, and the resulting composite image is sent and received.

33. The communication apparatus according to claim 31 or 32, wherein said image feature detector detects the size, position and/or motion of a person in the sent image.

34. The communication apparatus according to claim 31 or 32, wherein said image feature detector detects the size and position of the face or other parts of a person in the sent image.

35. The communication apparatus according to claim 33 or 34, wherein said image feature detector detects a skin color of the person in the sent image so that the skin color of the person is not impaired by the conversion of the image properties.

36. A communication apparatus comprising a server connected to a network and a plurality of communication terminals each being capable of communicating with one another through said server, said communication apparatus being capable of adding a special effect to an image and sending the resulting image from any of said communication terminal to any other communication terminals,
said server comprising:
an image storage for receiving and storing an image sent from a sending communication terminal;
a special effect storage unit for storing a program for adding a special effect to said sent image;
a special effect selector for selecting a special effect to be added to the sent image according to an instruction provided from said sending communication terminal;
a terminal information requesting module for requesting an intended receiving communication terminal to send terminal information about said receiving communication terminal;
a terminal information acquisition module for receiving said terminal information sent form said receiving communication terminal;
a special effect adding module for adding said selected special effect after converting the image properties of said sent image according to said terminal information; and
a composite image transmitter for sending the composite image to which the special effect is added to said receiving communication terminal;
wherein the image properties of said sent image is converted so as to be optimally displayed on said intended receiving communication terminal and then the image to which the special effect is added is sent and received.

37. The communication apparatus according to claim 36, wherein said server comprises an image feature detector for detecting a feature of said sent image and the special effect is added to said detected feature.

38. The communication apparatus according to claim 37, wherein said image feature detector detects the size, position and/or motion of a person in the sent image.

39. The communication apparatus according to claim 37, wherein said image feature detector detects the size and position of a face or other parts of the person in the sent image.

40. A communication apparatus comprising a server connected to a network and a plurality of communication terminals each being capable of communicating with one another through said server, said communication apparatus being capable of combining a plurality of images and sending the resulting composite image from any of said communication terminal to any other communication terminals,
said server comprising:
an image storage for receiving and storing an image sent from a sending communication terminal;
an additional information storage for storing a plurality of pieces of additional information to be combined with said sent image;
an additional information selector for selecting a piece of additional information to be combined with the sent image according to an instruction from said sending communication terminal;
a composite image confirming module for combining said sent image with said additional information and sending the resulting composite image to said sending communication terminal for confirmation;
an image transmitter for sending said image to an intended receiving communication terminal in response to confirmation provided from said sending communication terminal; and
an additional information transmitter for sending said additional information to the receiving communication terminal in response to confirmation provided from said sending communication terminal;
said communication terminal comprising:
an image viewing module for displaying the composite image received from said composite image confirming module;
an image transmitter for selecting an image and sending said image to said server;
an additional information specifying module for specifying additional information to be added to said image to be sent while viewing the additional information on said image viewing module;
a transmission commanding module for issuing a command for transmitting said image and said additional information to said receiving communication terminal;
an image receiver for receiving said sent image from said server;
an additional information receiver for receiving said additional information from said server;
a terminal information acquisition module for acquiring terminal information about said intended receiving communication terminal;
an additional information combining unit for converting said sent image and said additional information according to said terminal information and combining said converted image with said converted additional information; and
a display for displaying the composite image generated by said additional information combining module;
wherein image properties of said sent image and said additional information are converted so as to be optimally displayed on said intended receiving communication terminal, then said sent image and said additional information are combined and the resulting composite image is sent and received.

41. The communication apparatus according to claim 40, wherein said communication terminal comprises a program downloading module connected to the network for obtaining over the network a program for converting the image properties of said image and additional information according to said terminal information and combining said converted image with said converted additional information in said additional information combining module.

42. A communication apparatus comprising a server connected to a network and a plurality of communication terminals each being capable of communicating with one another through said server, said communication apparatus being capable of combining a plurality of images and sending a resulting composite image from any of said communication terminal to any other communication terminals,
said server comprising:
an image storage for receiving and storing an image sent from a sending communication terminal;
an additional information storage for storing a plurality of pieces of additional information to be combined with said sent image;
an additional information selector for selecting a piece of additional information to be combined with the sent image according to an instruction from said sending communication terminal;
a composite image confirming module for combining said sent image with said additional information and sending the resulting composite image to said sending communication terminal for confirmation;
an image transmitter for sending said sent image to an intended receiving communication terminal in response to confirmation provided from said sending communication terminal; and
an additional information transmitter for sending said additional information to the receiving communication terminal in response to confirmation provided from said sending communication terminal;
said communication terminal comprising:
an image viewing module for displaying the composite image received from said composite image confirming module;
an image transmitter for selecting an image and sending said image to said server;
an additional information specifying module for specifying additional information to be added to said image to be sent while viewing the additional information on said image viewing module;
a transmission commanding module for issuing a command for transmitting said image and said additional information to said receiving communication terminal;
an image receiver for receiving said sent image from said server;
an additional information receiver for receiving said additional information from said server;
a terminal information acquisition module for acquiring terminal information about said intended receiving communication terminal;
an image feature detector for detecting a feature of said sent image;
an additional information combining module for converting the image properties of said sent image and said additional information according to said terminal information and then superimposing said additional information on a position in said sent image, said position being determined according to the feature of said sent image; and
a display for displaying the composite image generated by said additional information combining module;
wherein the image properties of said sent image and said additional information are converted so as to be optimally displayed on said intended receiving communication terminal, then said sent image and said additional information are combined and the resulting composite image is sent and received.

43. The communication apparatus according to claim 42, wherein said image feature detector detects the size, position and/or motion of a person in the sent image.

44. The communication apparatus according to claim 42, wherein said image feature detector detects the size and position of a face or other parts of a person in the sent image.

45. The communication apparatus according to claim 43 or 44, wherein said image feature detector detects a skin color of the person in the sent image so that the skin color of the person is not impaired by the conversion of the image properties.

46. A communication apparatus comprising a server connected to a network and a plurality of communication terminals each being capable of communicating with one another through said server, said communication apparatus being capable of adding a special effect to an image and sending the resulting composite image from any of said communication terminal to any other communication terminals,
said server comprising:
an image storage for receiving and storing an image sent from a sending communication terminal;
a special effect storage unit for storing a program for adding a special effect to said sent image;
a special effect selector for selecting a special effect to be added to the sent image according to an instruction provided from said sending communication terminal;
a composite image conf irming module for adding the special effect to said image and sending the resulting composite image to said sending communication terminal for confirmation;
an image transmitter for sending said sent image to an intended receiving communication terminal in response to confirmation provided from said sending communication terminal; and
an additional information transmitter for sending the program for adding a special effect to said sent image to the receiving communication terminal;
said communication terminal comprising:
an image viewing module for displaying the composite image received from said composite image confirming module;
an image transmitter for selecting an image and sending said image to said server;
a special effect specifying module for specifying a special effect to be added to said image to be sent while viewing the special effect on said image viewing module;
a transmission commanding module for issuing a command for transmitting said image and the program for adding a special effect to said image to said receiving communication terminal;
an image receiver for receiving said sent image from said server;
an additional information receiver for receiving from said server the program for adding a special effect to said image;
a terminal information acquisition module for acquiring terminal information about said intended receiving communication terminal;
a special effect adding module for converting the image properties of said sent image according to said terminal information and then adding said selected special effect to said image; and
a display for displaying the composite image to which the special effect is added by said special effect adding module;
wherein the image properties of said sent image are converted so as to be optimally displayed on said intended receiving communication terminal, then said image to which the special effect is added is sent and received.

47. The communication apparatus according to any of claims 42, 43, 44 or 45, wherein said communication terminal comprises a program downloading module connected to the network for obtaining over the network a program for converting the image properties of said image and additional information according to said terminal information and then superimposing said additional information on a position in said image, said position being determined according to the feature of said image.

48. The communication apparatus according to claim 46, wherein said communication terminal comprises a program downloading module connected to said network for obtaining over the network a program for converting the image properties of said image according to said terminal information and adding said selected special effect to said image in said special effect adding module.

49. A communication apparatus comprising a server connected to a network and a plurality of communication terminals each being capable of communicating with one another through said server, said communication apparatus being capable of combining a plurality of images and sending the resulting composite image from any of said communication terminal to any other communication terminals,
said server comprising:
an image storage for receiving and storing an image sent from a sending communication terminal;
an additional information storage for storing a plurality of pieces of additional information to be combined with said sent image;
an additional information selector for selecting a piece of additional information to be combined with the sent image according to an instruction from said sending communication terminal;
a composite image confirming module for combining said sent image with said additional information and sending the resulting composite image to said sending communication terminal for confirmation; and
an additional information combining program transmitter for sending said image, said additional information, and a program for converting the image properties of said send image and said additional image according to said terminal information and combining said converted image with said converted additional information;
said communication terminal comprising:
an image viewing module for displaying the composite image received from said composite image confirming module;
an image transmitter for selecting an image and sending said image to said server;
an additional information specifying module for specifying additional information to be added to said image to be sent while viewing the additional information on said image viewing module;
a transmission commanding module for issuing a command for transmitting said image and a program for converting said image and said additional information according to the capabilities of a receiving communication terminal and combining said image with said additional information to said receiving communication terminal;
a terminal information acquisition module for acquiring terminal information about said intended receiving communication terminal;
an additional information combining program execution module for receiving the program for converting said image and said additional information according to the capabilities of a receiving communication terminal and combining said image with said additional information and executing said program to convert the image properties of said image and said additional information according to the terminal information and combine said image with said additional information; and
a display for displaying the composite image generated by said additional information combining program execution module;
wherein the image properties of said sent image and said additional information are converted so as to be optimally displayed on said intended receiving communication terminal, then said sent image and said additional information are combined and the resulting composite image is sent and received.

50. A communication apparatus comprising a server connected to a network and a plurality of communication terminals each being capable of communicating with one another through said server, said communication apparatus being capable of combining a plurality of images and sending the resulting composite image from any of said communication terminal to any other communication terminals,
said server comprising:
an image storage for receiving and storing an image sent from a sending communication terminal;
an additional information storage for storing a plurality of pieces of additional information to be combined with said sent image;
an additional information selector for selecting a piece of additional information to be combined with the sent image according to an instruction from said sending communication terminal;
a composite image confirming module for combining said sent image with said additional information and sending the resulting composite image to said sending communication terminal for confirmation; and
an additional information combining program transmitter for sending said image, said additional information, and a program for converting the image properties of said send image and said additional image according to said terminal information and combining said converted image with said converted additional information;
said communication terminal comprising:
an image viewing module for displaying the composite image received from said composite image confirming module;
an image transmitter for selecting an image and sending said image to said server;
an additional information specifying module for specifying additional information to be added to said image to be sent while viewing the additional information on said image viewing module;
a transmission commanding module for issuing a command for transmitting said image and a program for converting said image and said additional information according to the capabilities of a receiving communication terminal and combining said image with said additional information to said receiving communication terminal;
a terminal information acquisition module for acquiring terminal information about said intended receiving communication terminal;
an image feature detector for detecting a feature of said sent image;
an additional information combining program execution module for receiving the program for converting said image and said additional information according to the capabilities of a receiving communication terminal and combining said image with said additional information and executing said program to convert said image and said additional information and superimpose said additional information on a position in said sent image, according to said terminal information, said position being determined according to the feature of said image; and
a display for displaying the composite image generated by said additional information combining program execution module;
wherein the image properties of said sent image and said additional information are converted so as to be optimally displayed on said intended receiving communication terminal, then said sent image and said additional information are combined and the resulting composite image is sent and received.

51. The communication apparatus according to claim 50, wherein said image feature detector detects the size, position, and/or motion of a person in the sent image.

52. The communication apparatus according to claim 50, wherein said image feature detector detects the size and position of a face or other parts of the person in the sent image.

53. The communication apparatus according to claim 51 or 52, wherein said image feature detector detects a skin color of the person in the sent image so that the skin color of the person is not impaired by the conversion of the image properties.

54. A communication apparatus comprising a server connected to a network and a plurality of communication terminals each being capable of communicating with one another through said server, said communication apparatus being capable of adding a special effect to an image and sending the resulting composite image from any of said communication terminal to any other communication terminals,
said server comprising:
an image storage for receiving and storing an image sent from a sending communication terminal;
a special effect storage for storing a program for adding a special effect to said image;
a special effect selector for selecting a special effect to be added to the image according to an instruction provided from said sending communication terminal;
a composite image confirming module for adding a special effect to said image and sending the resulting composite image to said sending communication terminal for confirmation; and
an additional information combining program transmitter for sending said image and a program for converting said image according to the capabilities of a receiving communication terminal and generating a composite image to said receiving communication terminal;
said communication terminal comprising:
an image viewing module for displaying the composite image received from said composite image confirming module;
an image transmitter for selecting an image and sending said image to said server;
an additional information specifying module for specifying a special effect while viewing said special effect to be added to said image to be sent on said image viewing module;
a transmission commanding module for issuing a command for transmitting said image and the program for converting said image according to the capabilities of a receiving communication terminal and adding said specified special effect to said converted image to said receiving communication terminal;
a terminal information acquisition module for acquiring terminal information about said intended receiving communication terminal;
an additional information combining program execution module for receiving the program for converting said image according to the capabilities of a receiving communication terminal and adding said specified special effect to said image and executing said program to convert said image according to the terminal information and add said selected special effect to said image; and
a display for displaying the composite image to which said special effect is added by said additional information combining program execution module;
wherein the image properties of said image are converted so as to be optimally displayed on said intended receiving communication terminal and then said image to which the special effect is added is sent and received.
